(19) Europäisches Patentamt
European Patent Office
Office européen des brevets

(11) **EP 1 737 217 A2**

(12) **EUROPEAN PATENT APPLICATION**
published in accordance with Art. 158(3) EPC

(43) Date of publication:
**27.12.2006 Bulletin 2006/52**

(51) Int Cl.:
*H04N 5/335* (2006.01)    *H04N 5/225* (2006.01)
*H04N 5/91* (2006.01)    *H04N 9/07* (2006.01)

(21) Application number: **05734244.6**

(22) Date of filing: **13.04.2005**

(86) International application number:
**PCT/JP2005/007490**

(87) International publication number:
**WO 2005/099356 (27.10.2005 Gazette 2005/43)**

(84) Designated Contracting States:
**DE FR GB**

(30) Priority: **14.04.2004 JP 2004119052**

(71) Applicant: **Olympus Corporation**
**Tokyo 151-0072 (JP)**

(72) Inventor: **HORIE, Gen**
**1920914 (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **IMAGING DEVICE, IMAGE RECORDING MEDIUM, IMAGE PROCESSING DEVICE, IMAGE PROCESSING PROGRAM, AND RECORDING MEDIUM THEREOF**

(57)    The invention provides an imaging system for recording digitalized signals from an imaging device comprising a lens system (100) to CCD (103) in a recording medium at a processed image output block (119). The imaging system comprises a noise characteristics generation means (noise estimation block 112) for generating characteristics of noise included in the signals and a noise characteristics recording means (control block 115 and processed image output block 119) for recording the characteristics of noise in the recording medium.

FIG. 1

EP 1 737 217 A2

**Description**

ART FIELD

The present invention relates generally to processing for reducing random noises ascribable to an imaging device system, and more particularly to an imaging system and an image recording medium as well as an image processor, an image processing program and a recording medium thereof, wherein the quantity of noise generated is dynamically estimated so that only noise components can be reduced with high precision yet without being substantially affected by taking conditions.

BACKGROUND ART

Reducing noise from image data obtained by picking up images is important for imaging systems. JP(A) 2003-189236 teaches that images taken by an imaging system are recorded in a recording medium and, at the same time, taking conditions at a time of taking them are recorded there in association with image data, and that in reducing noise from the image data, a noise reduction level is changed depending on the recorded taking conditions for noise reduction processing so that noise reduction processing depending on the taking conditions can be implemented. Here, for instance, JP(A) 2001-157057 sets forth a technique wherein the quantity of noise is converted into a function form with respect to a signal level, the quantity of noise with respect to the signal level is estimated from that function, and the frequency characteristics of filtering are controlled on the basis of the noise quantity. This enables adaptive noise reduction processing to be implemented with respect to the signal level.

JP(A) 2003-189236 shows that the noise reduction level is changed depending on taking conditions such as ISO sensitivity and shutter speed. However, changes in the quantity of noise due to changes in taking conditions depend on the characteristics of imaging systems including imaging devices; even with a direct change in the noise reduction level depending on taking conditions, there is no sufficient noise reduction effect obtained. That is, it is impossible to precisely estimate the quantity of noise generated depending on taking conditions, and so it is impossible to implement any adaptive noise reduction processing. JP(A) 2001-157057 teaches to estimate the quantity of noise from a function $N = ab^{cD}$ where N is the quantity of noise and D is a signal level converted to a density value. Here, a, b and c are statically given constant terms. However, the quantity of noise changes dynamically with such factors as temperature, exposure time and gain at the taking time. That is, there is nothing corresponding to any function matching the quantity of noise at the taking time, ending up with poor estimation precision of noise quantities.

In view of such problems with the prior art as described above, the present invention is characterized in that the quantity of noise is modeled in such a way as to be adaptive to not only signal levels but also dynamically changing factors such as temperature, exposure time and gain at the taking time, and this model is recorded along with taken images. With such features, the present invention has for its object the provision of an imaging system and an image recording medium as well as an image processor, an image processing program and a recording medium thereof, wherein, even upon post-processing of data recorded in the recording medium, it is possible to implement noise reduction processing optimized for any taking situations.

DISCLOSURE OF THE INVENTION

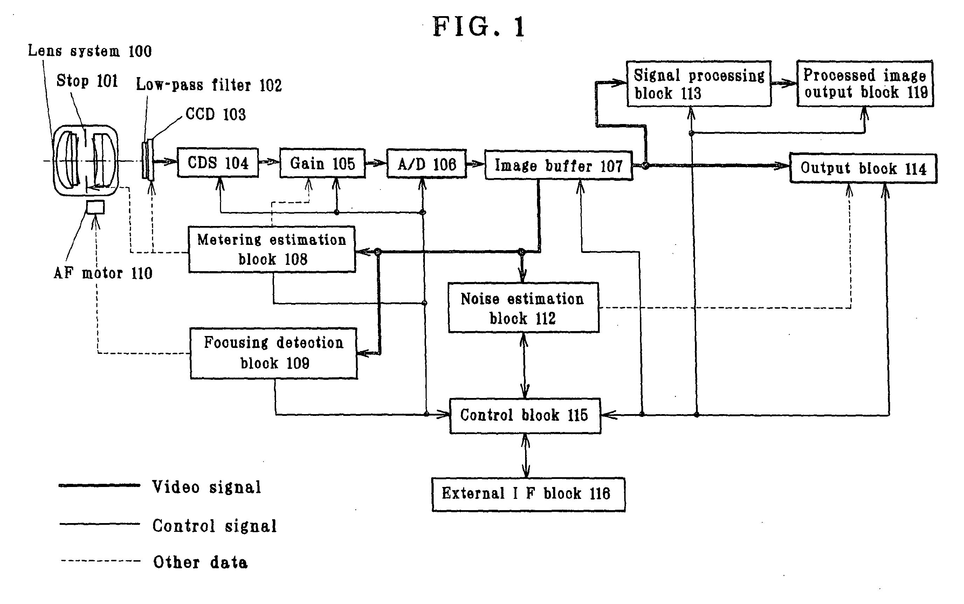

[1] According to the present invention, this object is accomplished by the provision of an imaging system adapted to record a digitalized signal from an imaging device in a recording medium, characterized by comprising a noise characteristics generation means for generating characteristics of noise included in said signal, and a noise characteristics recording means for recording said characteristics of noise in the recording medium. The imaging system here is embodied in the form of the first, and the second embodiment of the present invention. The noise characteristics generation means here is equivalent to the noise estimation block 112 shown in Figs. 1, 2 and 8, and the noise characteristics recording means here is equivalent to the output block 114 and control block 115 shown in Figs. 1, 2 and 8. The imaging system according to this embodiment is able to generate noise characteristics adapting to image signals and record them in the recording medium; it is possible to implement noise reduction processing of high precision based on the quantity of noises adapting to the image signals.

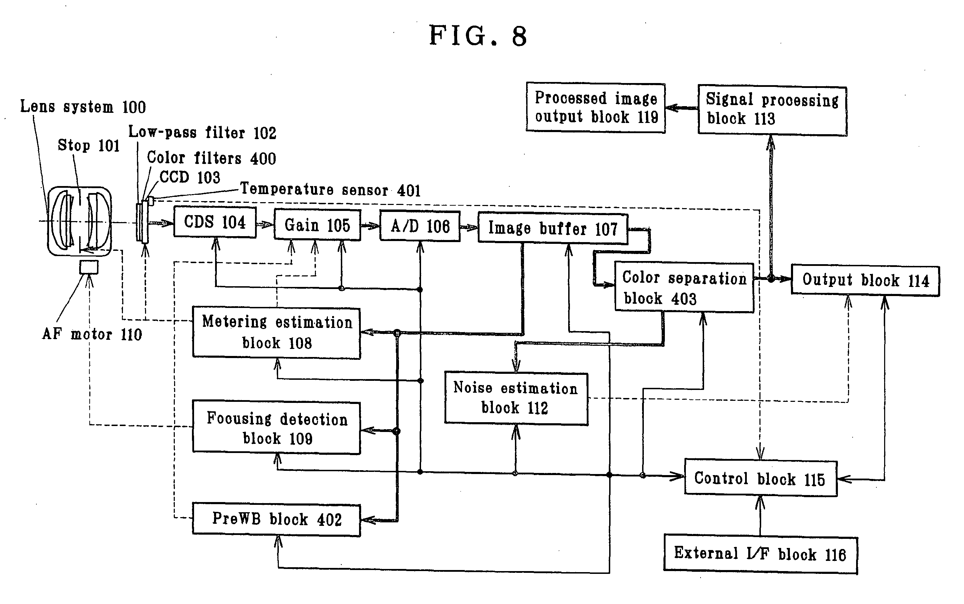

[2] The imaging system according to the above [1] is characterized by further comprising a color filter assembly located on a front of said imaging device and a separation means for separating said signal into signals for each color filter. The imaging system here is embodied in the form of the second embodiment of the invention. The color filter assembly here is equivalent to the color filter 400 shown in Fig. 8, and the separation means here is equivalent to the color separation block 403 shown in Fig. 8. With the imaging system according to this embodiment, noise reduction processing may be applied to a variety of imaging systems comprising primary-colors type CCDs, complementary color CCDs, and 1-chip, 2-chip and 3-chip CCDs.

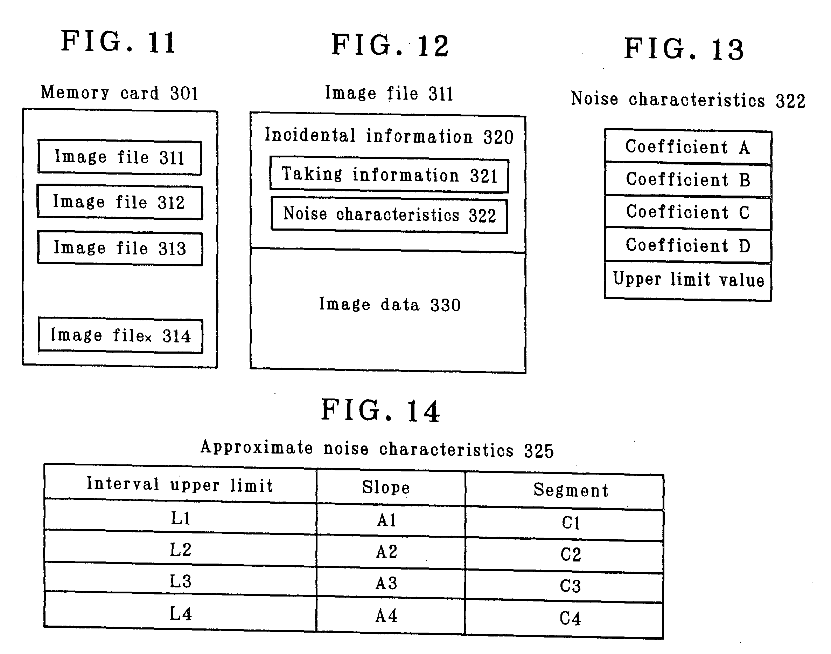

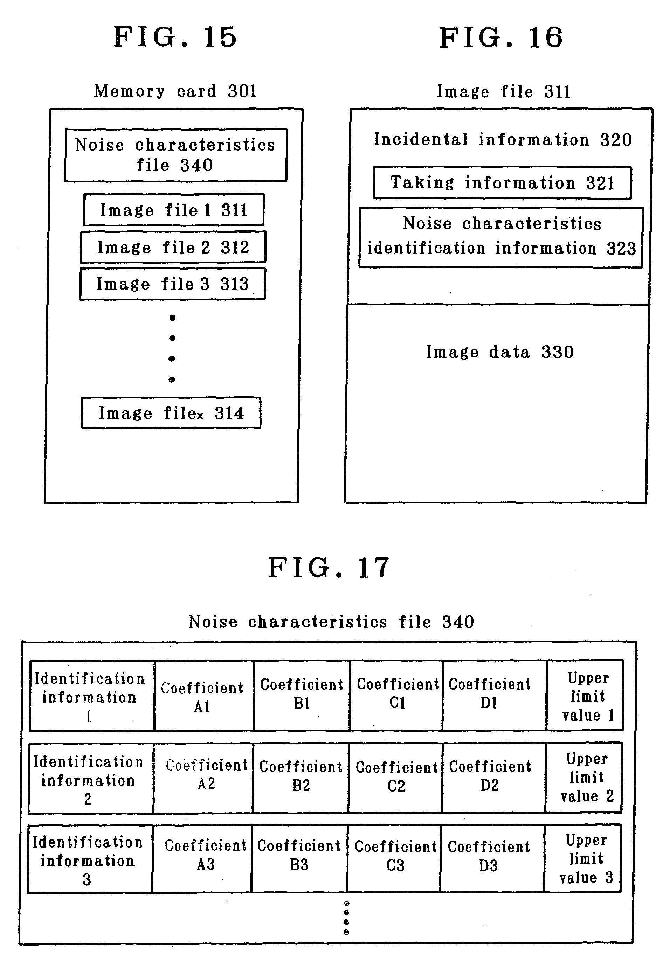

[3] The imaging system according to the above [1] is characterized in that said noise characteristics recording means is adapted to record said characteristics of noise in association with said signal. The imaging system here is embodied in the form of the first, and the second embodiment of the invention. The noise characteristics recording means here is equivalent to the output block 114 and control block 115 shown in Fig. 1, the noise characteristics 322 shown in Fig. 12, the approximate noise characteristics 325 shown in Fig. 14, the noise characteristics identification information 323 shown in Fig. 16, and the noise characteristics file 340 shown in Figs. 15, 17, 20 and 22. The imaging system according to this embodiment is able to record noise characteristics adapting to each image. Thus, the use of the optimum noise characteristics for each image enables noise reduction processing of high precision to be implemented.

[4] The imaging system according to the above [2] is characterized in that said noise characteristics generation means comprises a separated signal noise characteristics generation means for generating, on a signal separated for each color filter, associated noise characteristics. The imaging system here is embodied in the form of the second embodiment of the invention. The separated signal noise characteristics generation means is equivalent to the color separation block 403 and the noise estimation block 112 shown in Fig. 8. With the imaging system according to this embodiment, the noise characteristics are recorded for each signal separated at the color separation block. Thus, the use of noise characteristics for each signal separated at the color separation block enables noise reduction processing to be implemented with high precision.

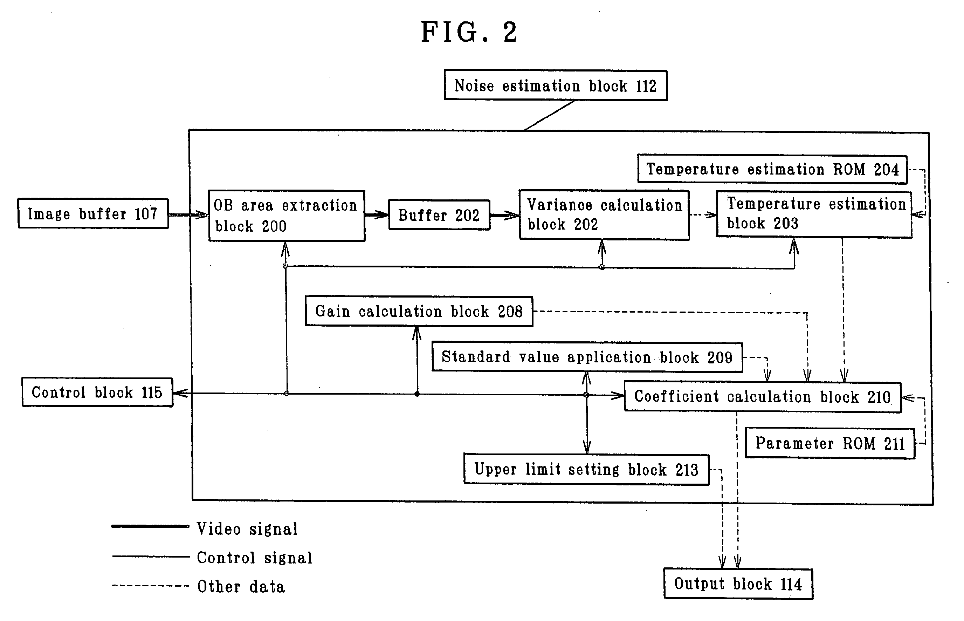

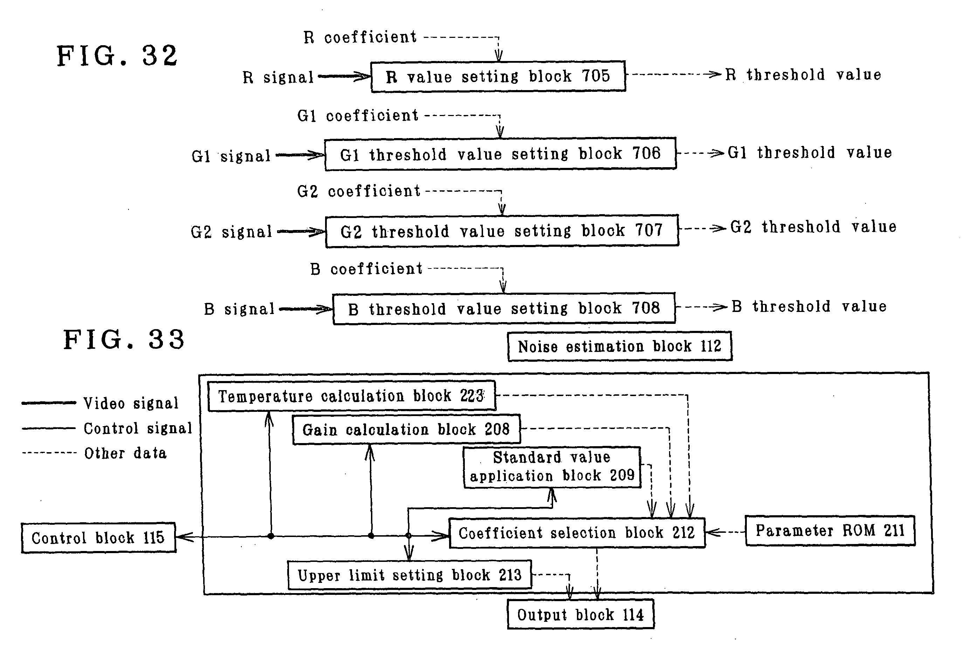

[5] The imaging system according to the above [1] or [2] is characterized in that said noise characteristics generation means comprises a parameter calculation means for working out a parameter that is based on at least one item of information out of (1) a signal value level of said signal, (2) a temperature of said imaging device, (3) a gain with respect to said signal, and (4) a shutter speed at a taking time, and a function setting means for setting a function of providing the quantity of noise included in said signal. The imaging system here is embodiment in the form of the first, and the second embodiment of the invention. The parameter calculation means here is equivalent to the OB area extraction block 200, the variance calculation block 202, the temperature estimation block 203, the temperature estimating ROM 204 and the gain calculation block 208 shown in Fig. 2, and the temperature calculation block 223 and the gain calculation block 208 shown in Fig. 33. The function setting means here is equivalent to the standard value application block 209, the coefficient calculation block 210, the parameter ROM 211 and the upper limit setting block 213 shown in Fig. 2, and the standard value application block 209, the coefficient selection block 212, the parameter ROM 211 and the upper limit setting block 213 shown in Fig. 33. The imaging system according to this embodiment is capable of generating noise characteristics depending on the temperature of the imaging device, the gain and the shutter speed and recording them in the recording medium so that the quantity of noise based on the noise quantity adapting to taking conditions can be recorded and noise reduction processing can be implemented with high precision.

[6] The imaging system according to the above [5] is characterized in that said function setting means is provided to work out a noise quantity N with respect to the signal level value L of said signal from a functional formula $N = (AL^B+C)D$, and comprises a coefficient calculation means that uses as parameters the temperature T of said imaging device, the gain G with respect to said signal and the shutter speed S at a taking time to find out the respective coefficients A, B, C and D from three functions $a(T,G)$, $b(T,G)$ and $c(T,G)$ with said T and G as parameters and a function $d(S)$ with S as a parameter. The imaging system here is embodied in the form of the first, and the second embodiment of the invention. The coefficient calculation means here is equivalent to the standard value application block 209, the coefficient calculation block 210, the parameter ROM 211 and the upper limit setting block 213 shown in Fig. 2. The imaging system according to this embodiment is capable of generating noise characteristics depending on the signal level of an image, the temperature of the imaging device and the gain in the form of a coefficient of a formula that is formulated on the basis of noise generation principles, and recording them in the recording medium. It is thus possible to implement high-precision noise reduction processing on the basis of the exact quantity of noise set depending on the signal level of the image, the temperature of the imaging device and the gain.

[7] The imaging system according to the above [5] is characterized in that said parameter calculation means further comprises a gain calculation means for finding out said gain on the basis of at least one item of information out of (1) ISO sensitivity, (2) exposure information and (3) white balance information. The imaging system here is embodied in the form of the first, and the second embodiment of the invention. The gain calculation means here is equivalent to the gain calculation block 208 shown in Fig. 2. With the imaging system according to this embodiment, the coefficient of the function that makes approximations to noise characteristics depending on the signal level of an image is recorded in the recording medium so that even for noise characteristics hard to model, it is easier to describe the noise characteristics and, hence, it is possible to implement high-precision nose reduction processing on the basis of the signal level of the image.

[8] The imaging system according to the above [1] or [2] is characterized in that said noise characteristics generation means is a noise function setting means for setting a function that provides the quantity of noise included in said signal, with a parameter based on the signal value level of said signal as an independent variable. The imaging system here is embodied in the form of the first, and the second embodiment of the invention. The noise function setting means here is equivalent to the OB area extraction block 200, the variance calculation block 202, the temperature estimation block 203, the temperature estimating ROM 204, the gain calculation block 208, the standard value application block 209, the coefficient calculation block 210, parameter ROM 211 and the upper limit setting block 213 shown in Fig. 2, and the temperature calculation block 223, the gain calculation block 208, the standard value application block 209, the coefficient selection block 212, the parameter ROM 211 and the upper limit setting block 213 shown in Fig. 33. The imaging system according to this embodiment is capable of generating noise characteristics depending on the signal value of an image and recording them in the recording medium. It is thus possible to implement high-precision noise reduction processing on the basis of the quantity noises set depending on a signal level for each pixel.

[9] The imaging system according to the above [8] characterized in that said noise function setting means comprises a taking condition setting means for setting a taking condition based on at least one item of information out of (1) a temperature of said imaging device, (2) a gain and (3) a shutter speed, and a condition associated function setting means for setting a function that provides the quantity of noise included in said signal in association with said taking condition. The imaging system here is embodied in the form of the first, and the second embodiment of the invention. The taking condition setting means is equivalent to the OB area extraction block 200, the variance calculation block 202, the temperature estimation block 203, the temperature estimating ROM 204 and the gain calculation block 208 shown in Fig. 2, and the temperature calculation block 223 and the gain calculation block 208 shown in Fig. 33. The condition associated function setting means is equivalent to the standard value application block 209, the coefficient calculation block 210, the parameter ROM 211 and the upper limit setting block 213 shown in Fig. 2, and the standard value application block 209, the coefficient selection block 212, the parameter ROM 211 and the upper limit setting block 213 shown in Fig. 33. The imaging system according to this embodiment is capable of generating noise characteristics depending on the temperature of the imaging device, the gain and the shutter speed and recording them in the recording medium. It is thus possible to implement high-precision noise reduction processing on the basis of the quantity of noises adapting to the taking conditions and the signal level for each pixel.

[10] The imaging system according to the above [8] or [9] is characterized in that said noise function setting means is provided to work out a noise quantity N with respect to a signal value L of said signal from an interval function formula $N = A_iL + C_i$ where $1 \leqq i \leqq M$ with M being a number of section intervals of the signal value L, and comprises a coefficient setting means for setting a value for defining each section interval of the signal value L, and coefficients $A_i$ and $C_i$ corresponding to each interval. The imaging system here is embodied in the form of the first, and the second embodiment of the invention. The coefficient setting means here is equivalent to the standard value application block 209, the coefficient selection block 212, the parameter ROM 211 and the upper limit setting block 213 shown in Fig. 33. The imaging system according to this embodiment is capable of recording in the recording medium the coefficient of the function that makes approximations to noise characteristics depending on the signal level of an image. Even complicated noise characteristics are thus easier to describe; it is possible to implement high-precision noise reduction processing on the basis of the signal level of an image.

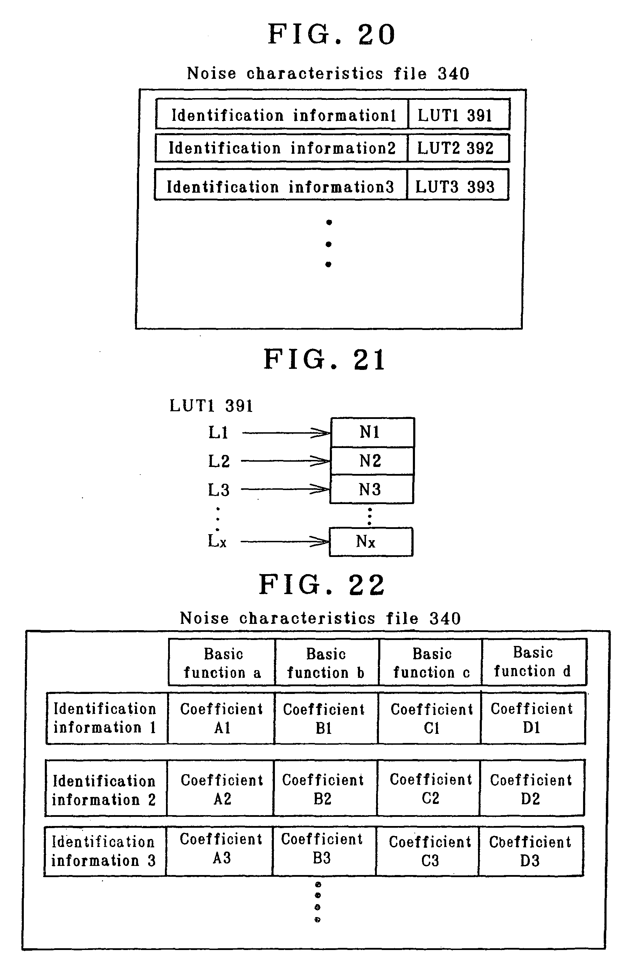

[11] The imaging system according to the above [8] or [9] is characterized in that said noise function setting means comprises a lookup take means for finding out a noise quantity with respect to the signal value level of said signal. The imaging system here is embodied in the form of the first, and the second embodiment of the invention. The lookup table means here is equivalent to the coefficient selection block 212 and the parameter ROM 211 shown in Fig. 33, and LUT1391 shown in Fig. 21. The imaging system according to this embodiment is capable of generating noise characteristics depending on the signal level of an image, the temperature of the imaging device and the gain in the form of a coefficient of a formula that is formulated on the basis of noise generation principles, and recording them in the recording medium. It is thus possible to precisely describe even noise characteristics hard to model and, hence, it is possible to implement high-precise noise reduction processing on the basis of the signal level of an image.

[12] The imaging system according to the above [9] is characterized in that said taking condition setting means further comprises a gain calculation means for finding out said gain on the basis of at least one item of information out of (1) ISO sensitivity, (2) exposure information and (3) white balance information. The imaging system here is embodied in the form of the first, and the second embodiment of the invention. The gain calculation means here is equivalent to the gain calculation block 208 shown in Fig. 2. With the imaging system according to this embodiment, the quantity of gain at a taking time is found out from ISO sensitivity, exposure information and white balance information so as to be used as a parameter for noise quantity estimation. It is thus possible to adapt dynamically to gain changes at the taking time and, hence, estimate the noise quantity with high precision.

[13] The present invention also provides an image processor adapted to read image data recorded in a recording medium for implementation of noise reduction processing, characterized by comprising:

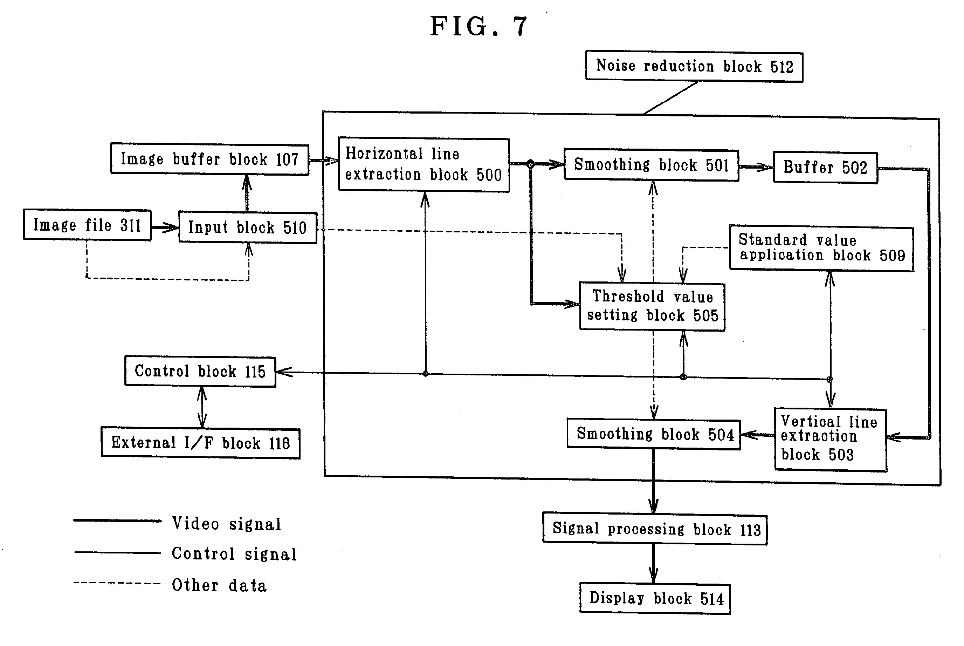

a noise characteristics acquisition means for reading noise characteristics recorded in said recording medium, a noise estimation means for estimating a quantity of noise included in said image data on the basis of said noise characteristics, and a noise reduction means for reducing noise in said image data on the basis of said quantity of noise. The image processor here is embodied in the form of the third, and the fourth embodiment of the invention. The noise characteristics acquisition means is equivalent to the input block 510 shown in Fig. 7; the noise estimation means here is equivalent to the threshold value setting means 505 shown in Fig. 7, and the R threshold value setting block 705, the G1 threshold value setting block 706, the G2 threshold value setting block 707 and the R threshold value setting block 708 shown in Fig. 32; and the noise reduction means here is equivalent to the smoothing blocks 1 501 and 2 504 shown in Fig. 7. The image processor according to this embodiment is operable to estimate the quantity of noise included in an image by way of noise characteristics and implement noise reduction processing depending on the quantity of noises. Thus, by estimating the quantity of noise included in an image, it is possible to implement high-precision noise reduction processing.

[14] The image processor according to the above [13] is characterized in that said noise reduction means further comprises a reduction quantity limiting means for limiting a quantity of noise reduction. The image processor here is embodied in the form of the third, and the fourth embodiment of the invention. The reduction quantity limiting means here is equivalent to the reduction quantity setting block 801 shown in Fig. 24, the reduction quantity setting block 801 shown in Fig. 25, and the upper limit setting block 603 shown in Fig. 26. The image processor according to this embodiment is capable of limiting the tightness of noise reduction. Such limitations on the noise reduction quantity help keep reduction effects neither too much nor too little, obliterating ailments such as poor resolution.

[15] Further, the present invention provides an image recording medium with image signal data recorded therein, characterized by comprising:

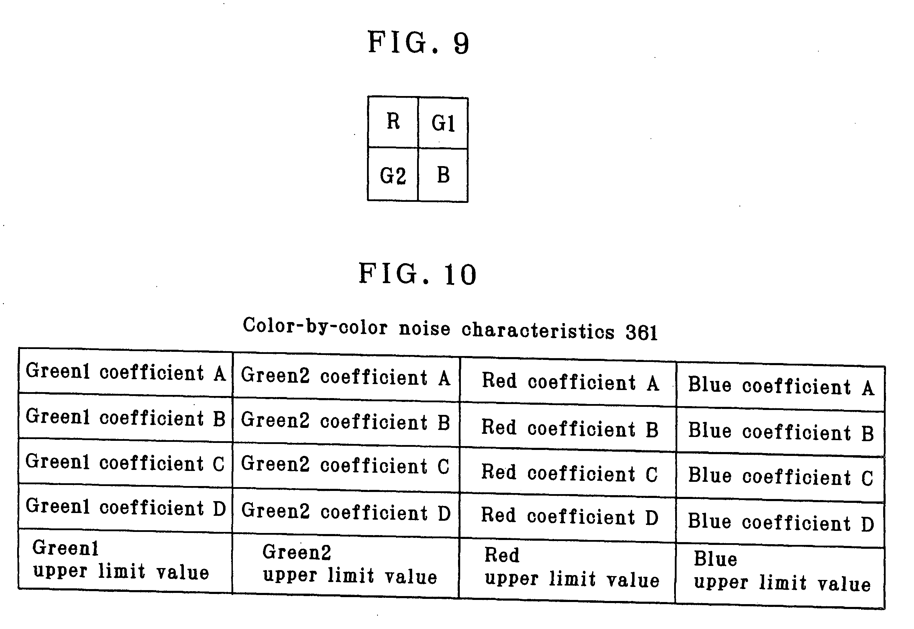

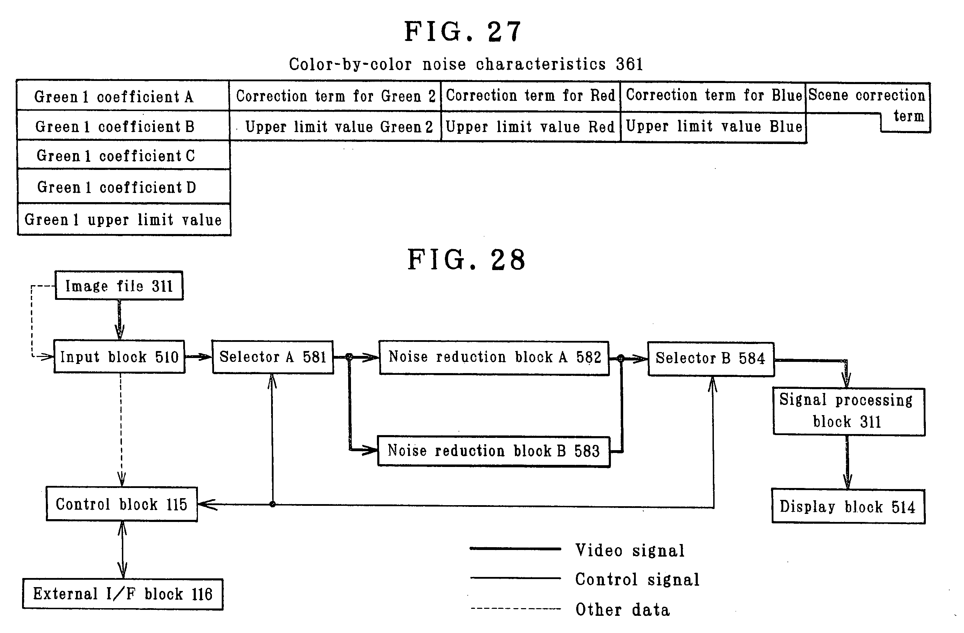

a noise characteristics holder means wherein the characteristics of noise in the image signal data recorded are recorded. The image recording medium here is embodied in the form of the first, and the second embodiment of the invention. The noise characteristics holder means here is equivalent to the noise characteristics 322 shown in Fig. 12, the noise characteristics file 340 shown in Fig. 15, the noise characteristics identification information 323 shown in Fig. 16 and the noise characteristics file 340 shown in Fig. 17, the noise characteristics file 340 shown in Fig. 20, the noise characteristics file 340 shown in Fig. 22, the color-by-color noise characteristics 361 shown in Fig. 10, and the color-by-color noise characteristics 361 shown in Fig. 27. The recording medium here is capable of recording a function representative of the characteristics of noise adapting to an image signal. It is thus possible to implement high-precision noise reduction processing on the basis of the quantity of noises adapting to the image signal.

[16] The image recording medium according to the above [15] is characterized in that said characteristics of noise are set by a function setting means wherein a parameter based on at least one item of information out of (1) the signal value level of said image signal, (2) the temperature of an imaging device at a time of acquiring said image signal data, (3) a gain with respect to said image signal, and (4) the shutter speed of the imaging device at a time of acquiring said image signal data, is worked out, and said parameter is used as an independent variable to provide the quantity of noise included in said image signal. The image recording medium here is embodied in the form of the first, and the second embodiment of the invention. The noise quantity provision function here is equivalent to the noise characteristics 322 shown in Fig. 12, the approximate noise characteristics 325 shown Fig. 14, the noise characteristics identification information 323 shown in Fig. 16, and the noise characteristics file 340 shown in Figs. 15, 17, 20, and 22. The recording medium according to this embodiment is capable of recording a function representative of the characteristics of noise adapting to each image. It is thus possible to use the noise characteristics optimum for each image, thereby implementing high-precision noise reduction processing.

[17] The image recording medium according to the above [16] is characterized in that said function setting means for providing the quantity of noise is provided to work out a noise quantity N with respect to a signal value L of said image signal from a functional formula $N = (AL^B + C)D$, and comprises a coefficient calculation means for using as parameters a temperature T of said imaging device, a gain G with respect to said signal and a shutter speed S at a taking time to find out respective coefficients A, B, C and D from three functions with said T and G as parameters and a function d(S) with S as a parameter, and said characteristics of noise are the coefficients A, B, C and D set by said coefficient calculation means. The image recording medium here is embodied in the form of the first, and the second embodiment of the invention. The recording medium according to this embodiment is capable of recording a function precisely representative of the characteristics of noise adaptive to each image. It is thus possible to precisely reproduce the optimum noise characteristics for each image, thereby implementing high-precision noise reduction processing.

[18] The image recording medium according to the above [15] is characterized in that said characteristics of noise are set by a noise function setting means for providing a quantity of noise included in said signal, with a parameter based on the signal value level of said image signal as an independent variable. The image recording medium here is embodied in the form of the first, and the second embodiment of the invention. The noise quantity provision function here is equivalent to the noise characteristics 322 shown in Fig. 12, the approximate noise characteristics 325 shown Fig. 14, the noise characteristics identification information 323 shown in Fig. 16, and the noise characteristics file 340 shown in Figs. 15, 17, 20, and 22. The recording medium according to this embodiment is capable of recording a function representative of the characteristics of noise adapting to each image. It is thus possible to use the noise characteristics optimum for each image, thereby implementing high-precision noise reduction processing.

[19] The image recording medium according to the above [18] is characterized in that said noise function setting means comprises a taking condition setting means for setting a taking condition based on at least one item of information out of (1) a temperature of an imaging device at a time of acquiring said image signal data, (2) a gain with respect to said image signal and (3) a shutter speed of the imaging device at a time of acquiring said image signal data, and a condition associated function setting means for a setting a function that provides a quantity of noise included in said signal in association with said taking condition. The image recording medium here is embodied in the form of the first, and the second embodiment of the invention. The noise quantity provision function here is equivalent to the noise characteristics 322 shown in Fig. 12, the approximate noise characteristics 325 shown Fig. 14, the noise characteristics identification information 323 shown in Fig. 16, and the noise characteristics file 340 shown in Figs. 15, 17, 20, and 22. The recording medium according to this embodiment is capable of recording a function representative of the characteristics of noise adapting to each image. It is thus possible to use the noise characteristics optimum for each image, thereby implementing high-precision noise reduction processing.

[20] The image recording medium according to the above [18] is characterized in that said noise function setting means is provided to work out a noise quantity N with respect to a signal value L of said signal from an interval function formula $N = A = A_i L + C_i$ where $1 \leqq i \leqq M$ with M being the number of section intervals of the signal value L, and comprises a coefficient setting means for setting a value for defining each section interval of the signal value L, and coefficients Ai and Ci corresponding to each interval. The image recording medium here is embodied in the form of the first, and the second embodiment of the invention. The value for defining each section interval of the signal value L, and coefficients Ai and Ci (where $1 \leqq i \leqq M$ with M being the number of section intervals of the signal value L) here are equivalent to the proximate noise characteristics 325 shown in Fig. 14. The recording medium according to this embodiment is capable of recording a simple function representative of the characteristics of noise adapting to each image. Even when the memory capacity of the recording medium is limited, it is thus possible to use the noise characteristics optimum for each image, thereby implementing high-precision noise reduction processing.

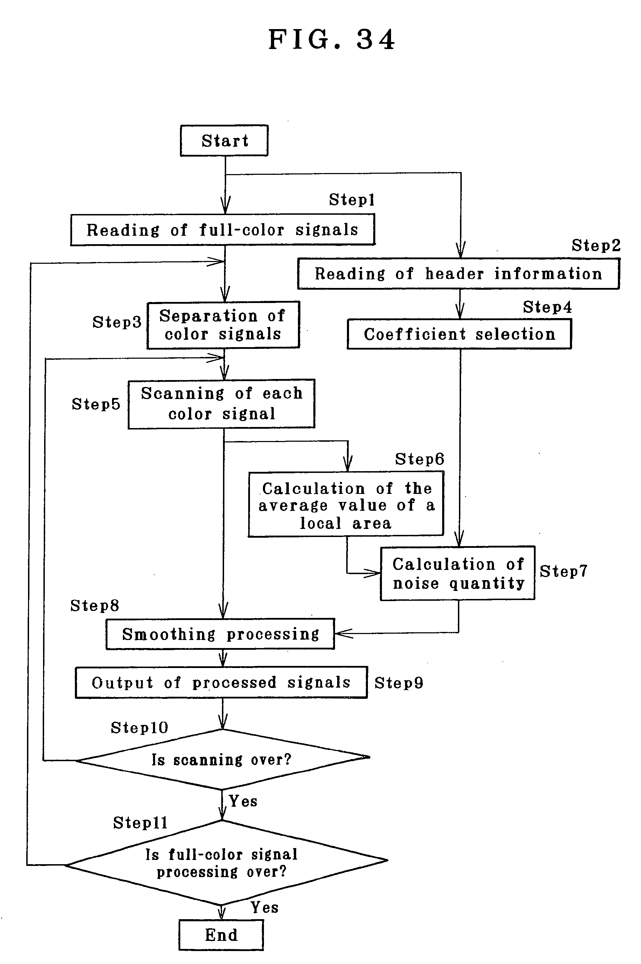

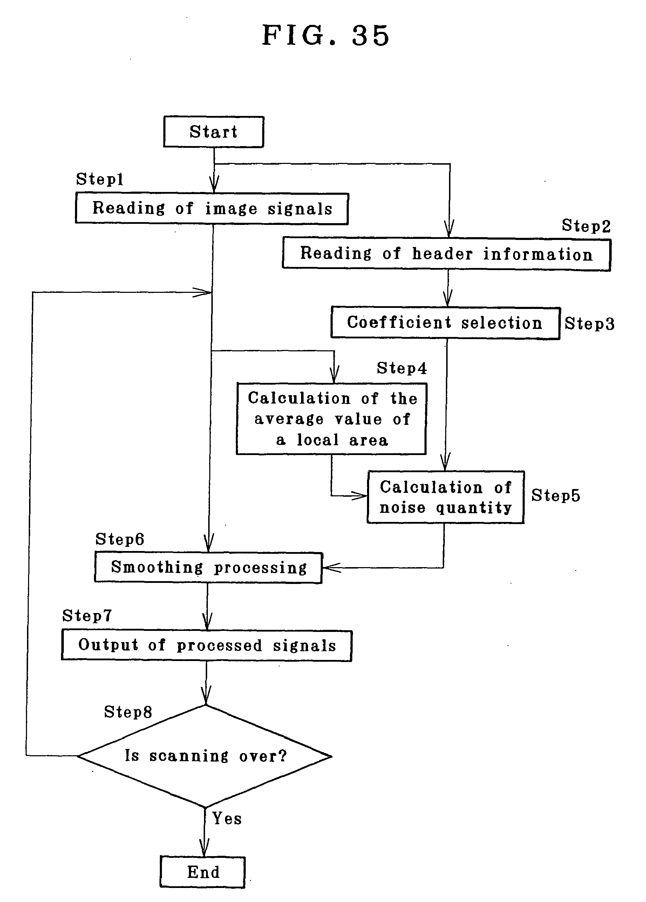

[21] Further, the present invention provides an image processing program for implementation of a step of reading an image signal in a computer, a step of reading header information in the computer to read noise characteristics corresponding to the image signal, a step of estimating a quantity of noise included in said image signal on the basis of said noise characteristics, a step of reducing noise in said image signal on the basis of said quantity of noise, and a step of producing an image signal having said noise reduced as an output. The program here is embodied in the form of the third, and the fourth embodiment of the invention. The steps here are shown in Figs. 34 and 35. According to the program of this embodiment, the quantity of noise included in an image is so estimated that image processing for high-precision noise reduction processing can be run on software.

[22] Further, the present invention provides an image processing program for letting a computer execute a step of reading a full-color signal in the computer, a step of reading header information in the computer to read a noise calculation coefficient corresponding to the full-color signal, a step of separating said full-color signal into each color signal, a step of selecting a noise calculation coefficient corresponding to said separated color, a step of individually scanning said each color signal, a step of extracting a pixel unit of given size around a pixel of interest to work out an average of signal value levels, a step of working out, on the basis of a given operation, a noise quantity corresponding to a signal value level from a signal value level in a local area about said pixel of interest and said noise calculation coefficient, a step of applying smoothing operation to a signal of said pixel of interest while a noise quantity corresponding to the signal value level in a local area is used as a threshold value, a step of sequentially producing signals subjected to said smoothing operation, a step of judging whether or not screen scanning is complete, and a step of judging whether or not said respective steps for the full-color signal are complete. The program here is embodied in the form of the second, the third, and the fourth embodiment of the invention. The respective steps here are illustrated in Fig. 34. The program of this embodiment enables image processing for high-precision noise reduction processing of color images to be run on software.

[23] Further, the present invention provides an image processing program for letting a computer execute a step of reading an image signal in the computer, a step of reading header information in the computer to read a noise calculation coefficient corresponding to the image signal, a step of selecting a noise calculation coefficient corresponding to said image signal, a step of extracting a pixel unit of given size around a pixel of interest to work out an average of a signal value level, a step of working out, on the basis of a given operation, a noise quantity corresponding to a signal value level from a signal value level in a local area around said pixel of interest and said noise calculation coefficient, a step of applying smoothing operation to a signal of said pixel of interest while a noise quantity corresponding to the signal value level in a local area is used as a threshold value, a step of sequentially producing signals subjected to said smoothing operation as outputs, and a step of judging whether or not screen scanning is complete. The program here is embodied in the form of the first embodiment of the invention. The respective steps here are equivalent to those illustrated in Fig. 34, saving the steps for color image processing. The program of this embodiment enables image processing for high-precision noise reduction processing of white-and-black images to be run on software.

[24] The image processing program according to any one of the above [21] to [23] is recorded in the recording medium of the invention. The recording medium here is embodied in the form of the first, the second, the third, and the fourth embodiment of the invention. If the recording medium according to this embodiment is installed in a computer, then high-precision noise reduction processing of color images, and gray scale images can be implemented.

BRIEF DESCRIPTION OF THE DRAWINGS

Fig. 1 is representative of the architecture of the first embodiment.
Fig. 2 is representative of the architecture of the first embodiment.

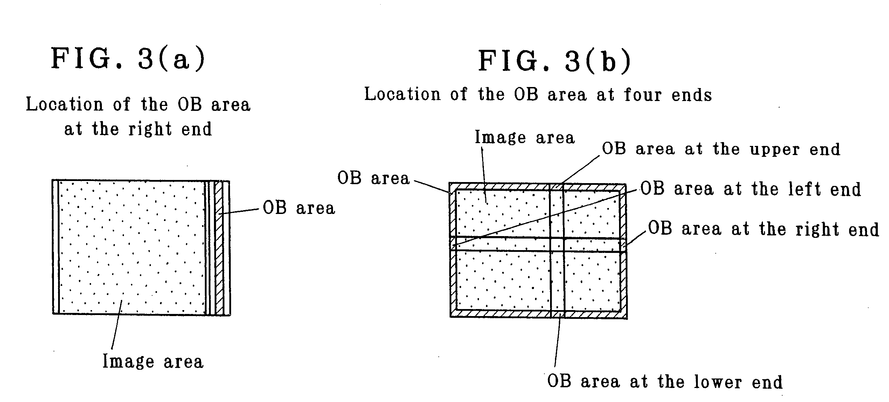

Fig. 3 is illustrative of the first embodiment.

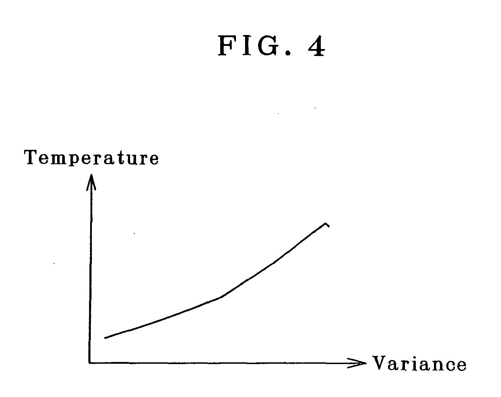

Fig. 4 is indicative of the characteristics of the first embodiment.

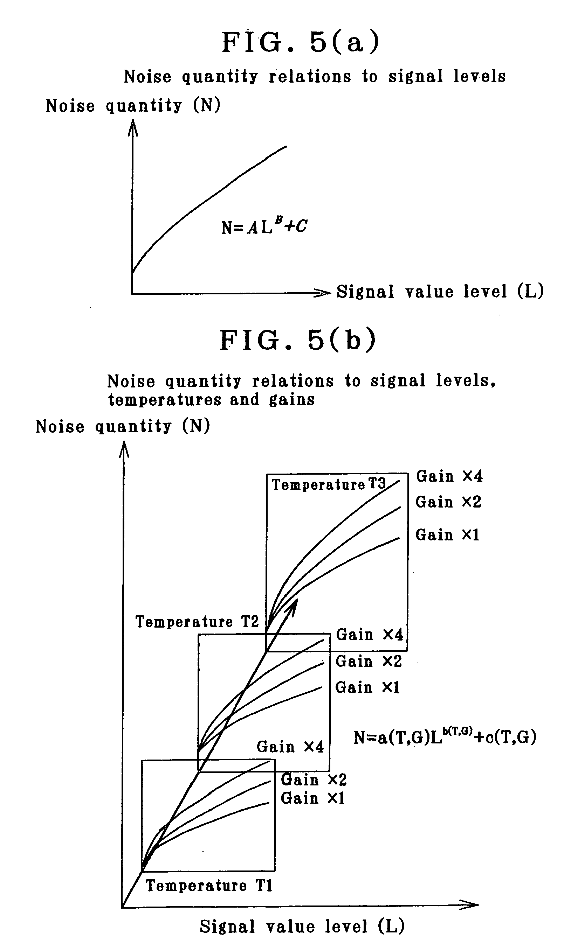

Fig. 5 is illustrative of the first embodiment.

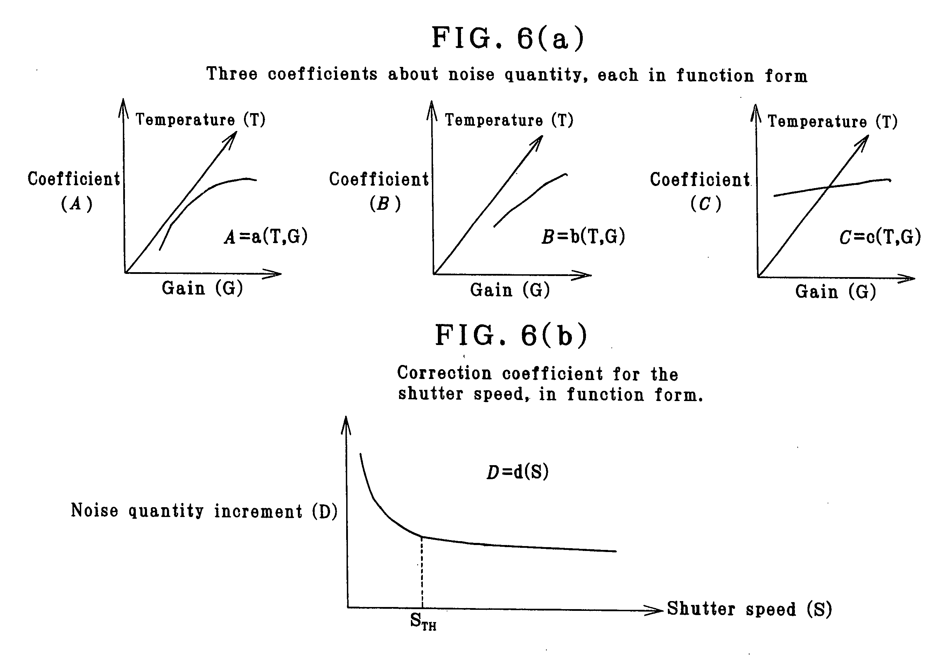

Fig. 6 is indicative of the characteristics of the first embodiment.
Fig. 7 is representative of the architecture of the third embodiment.
Fig. 8 is representative of the architecture of the second embodiment.
Fig. 9 is illustrative of the second embodiment.
Fig. 10 is illustrative of the second embodiment.
Fig. 11 is illustrative of the first embodiment.
Fig. 12 is illustrative of the first embodiment.
Fig. 13 is illustrative of the first embodiment.
Fig. 14 is illustrative of the first modification to the first embodiment.
Fig. 15 is illustrative of the second modification to the first embodiment.
Fig. 16 is illustrative of the second modification to the first embodiment.
Fig. 17 is illustrative of the second modification to the first embodiment.

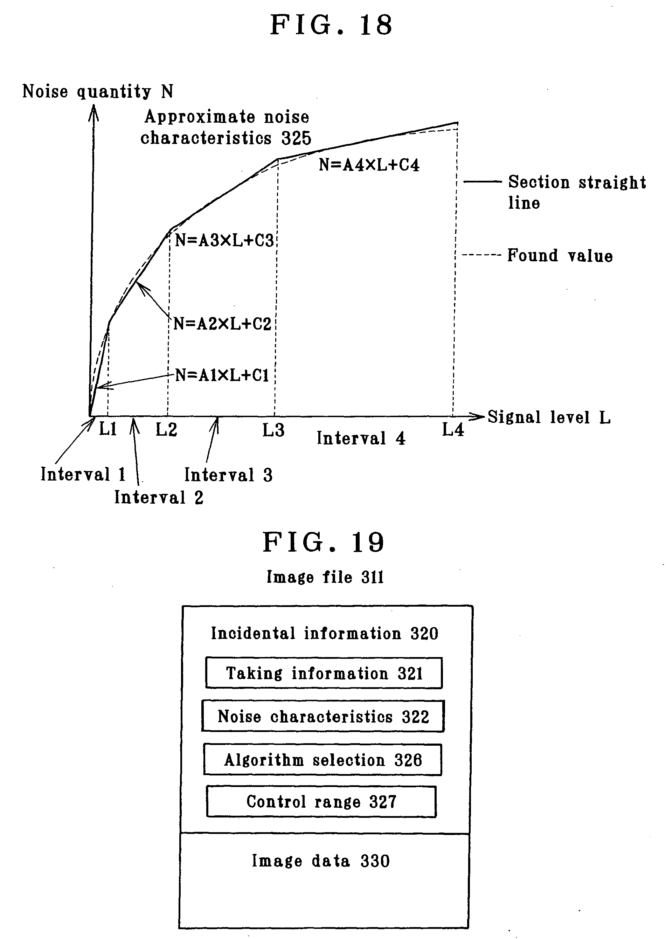

Fig. 18 is indicative of the characteristics of the first embodiment.
Fig. 19 is illustrative of the fifth modification to the first embodiment.
Fig. 20 is illustrative of the third modification to the first embodiment.
Fig. 21 is illustrative of the third modification to the first embodiment.
Fig. 22 is illustrative of the fourth modification to the first embodiment.

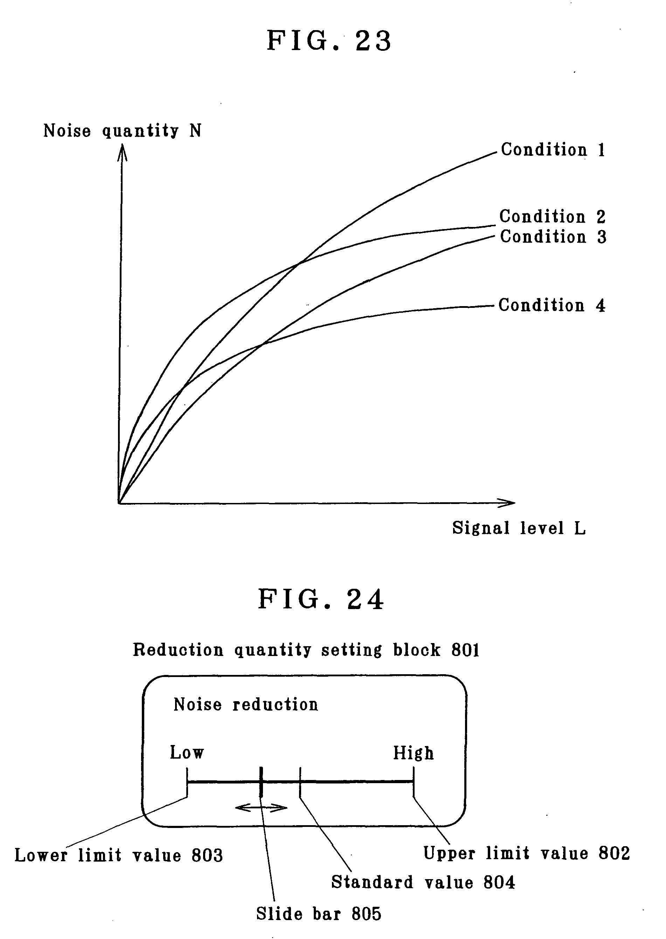

Fig. 23 is indicative of the characteristics of the first embodiment.
Fig. 24 is illustrative of the third embodiment.

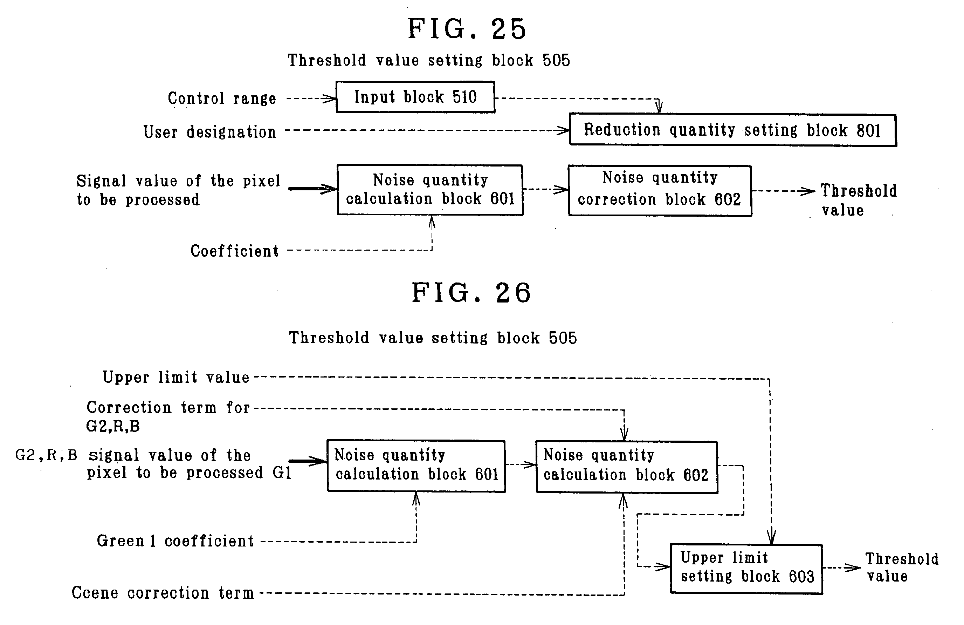

Fig. 25 is illustrative of the architecture of the second modification to the third embodiment.
Fig. 26 is illustrative of the architecture of the first modification to the fourth embodiment.
Fig. 27 is illustrative of the architecture of the first modification to the second embodiment.
Fig. 28 is illustrative of the architecture of the first modification to the third embodiment.

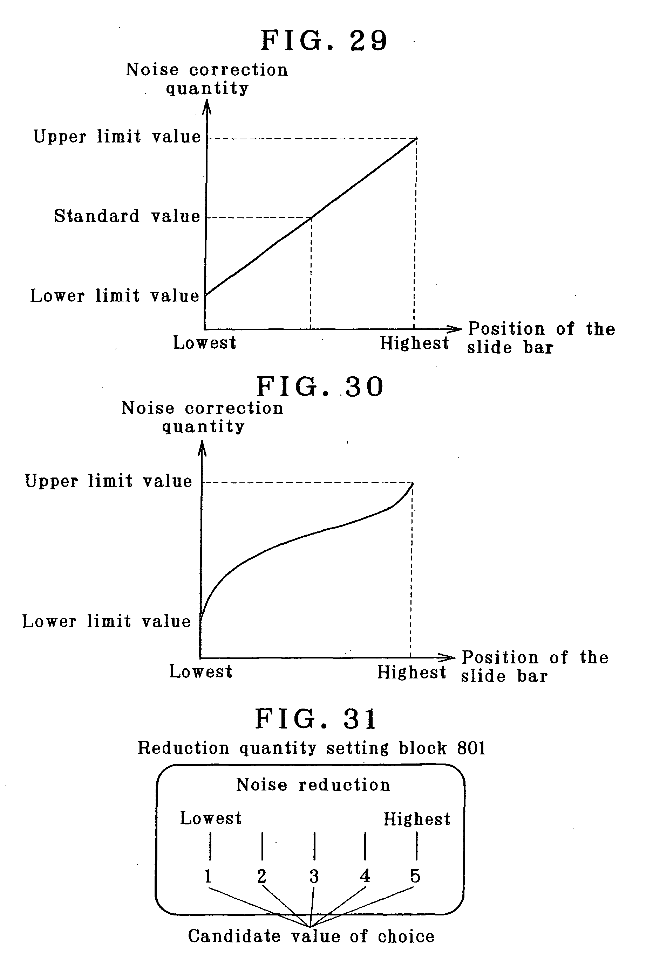

Fig. 29 is indicative of the characteristics of the third embodiment.
Fig. 30 is indicative of the characteristics of the third embodiment.
Fig. 31 is illustrative of the fifth modification to the first embodiment.
Fig. 32 is illustrative of the architecture of the fourth embodiment.
Fig. 33 is illustrative of the architecture of a modification to the first embodiment.
Fig. 34 is a flowchart for an embodiment of the present invention.
Fig. 35 is a flowchart for an embodiment of the present invention.

BEST MODE FOR CARRYING OUT THE INVENTION

The embodiments of the present invention are now explained with reference to the accompanying drawings. The embodiments of the present invention are each directed to an imaging system supposed to be used with a digital camera, wherein images taken by an imaging device are A/D converted into digital data for storage in a recording medium. Generally in the digital camera, the converted digital data are further subjected to signal processing such as noise reduction, gray level transformation, edge enhancement, etc. In the embodiments contemplated here, however, any processing is not applied to the digital data at all; data just after digitalization (raw data) are recorded, and signal processing is applied to them by means of other system different than the imaging system. The reasons are that processing with the aforesaid other system ensures higher performance than could be achieved by processing within the imaging system, and enables the user to control the extent of processing in an easier manner.

Fig. 1 is representative of the architecture of the first embodiment according to the present invention. Images (gray scale images) taken via a lens system 100, a stop 101, a low-pass filter 102 and a white-and-black CCD 103 is sampled by a CDS (correlated double sampling) 104. The sampled signals are amplified at a gain control (Gain) 105, and converted by A/D 106 into digital signals. Signals from A/D 106 are forwarded to an output block 114 by way of an image buffer 107. The image buffer 107 is connected to a metering estimation block 108 and a focusing detection block 109, too. The metering estimation block 108 is connected to the stop 101, CCD 103 and Gain 105, and the focusing detection block 109 is connected to an AF motor 110. The image buffer 107 is connected to a noise estimation block 112 that is connected to an output block 114. Further, signals from the image buffer 107 are connected to a processed image output block 119 such as a memory card by way of a signal processing block 113. A control block 115 such as a microcomputer is bidirectionally connected to CDS 104, Gain 105, A/D 106, the metering estimation block 108, the focusing detection block 109, the noise estimation block 112, the signal processing block 113, the output block 114 and the processed image output block 119. Further, an external I/F block 116 comprising a power source switch, a shutter button and a mode select interface at the taking time, too, is bidirectionally connected to the control block 115. Note here that the signal processing block 113 connected to the image buffer 107 and the processed image output block 119 are only illustrative of the general structure of the aforesaid digital camera, and are not essential components of the first embodiment.

Referring further to Fig. 1, the flow of signals is explained. After taking conditions such as ISO sensitivity are set via the external I/F block 116, the shutter button is half pressed down to place the camera in a pre-image pickup mode. Video signals taken via the lens system 100, the stop 101, the low-pass filter 102 and CCD 103 are read as analog signals by known correlated double sampling at CDS 104. The analog signals are amplified a given quantity at gain control (Gain) 105, and converted by A/D 106 into digital signals that are then forwarded to the image buffer 107. Video signals within the image buffer 107 are forwarded to the metering estimation block 108 and the focusing detection block 109. At the metering estimation block 108, the stop 101, the electronic shutter speed of CCD 103, the rate of amplification at the gain control (Gain) 105, etc. are controlled such that in consideration of the set ISO sensitivity, a camera-shake limit shutter speed, etc., the luminance level in the image is determined for proper exposure. At the focusing detection block 109, the edge intensity in the image is detected, and the AF motor 110 is controlled such that the maximum edge intensity is obtained, thereby obtaining a focused image.

Then, the shutter button is full pressed down by way of the external I/F block 106 so that the image can be taken, and video signals are forwarded to the image buffer 107, as in the pre-image pickup mode. The image is taken under exposure conditions determined at the metering estimation block 108 and focusing conditions found at the focusing detection block 109, and these taking conditions are forwarded to the control block 115. The exposure conditions found at the metering estimation block 108 and the taking conditions such as ISO sensitivity determined at the external I/F block 116 are forwarded to the noise estimation block 112 by way of the control block 115. On the basis of the aforesaid information, the noise estimation block 112 works out a noise quantity calculation coefficient adaptive to the aforesaid conditions. That noise quantity calculation coefficient is forwarded to the output block 114. On the basis of control at the control block 115, the image buffer 107 forwards the video signals to the output block 114. The output block 114 records and stores the video signals transmitted from the image buffer 107 and the noise quantity calculation coefficient transmitted from the noise estimation block 112 in a memory card or the like. On the basis of control at the control block 115, the signal processing block 113 applies known enhancement and compression processing, etc. to the video signals to forward them to the processed image output block 119. At the processed image output block 119, the transmitted image signals are recorded and stored in an image recording medium such as a memory card.

Fig. 2 is representative of one example of the architecture of the noise estimation block 112. The noise estimation block 112 is made up of an OB area extraction block 200, a buffer 1 201, a variance calculation block 202, a temperature estimation block 203, a temperature estimating ROM 204, a gain calculation block 208, a standard value application block 209, a coefficient calculation block 210, a parameter ROM 211 and an upper limit setting block 213. The image buffer 107 is connected to the OB area extraction block 200. The OB area extraction block 200 is connected to the coefficient calculation block 210 by way of the buffer 1 201, the variance calculation block 202 and the temperature estimation block 203, and there is the temperature estimating ROM 204 connected to the temperature estimation block 203. The control block 115 is bidirectionally connected to the OB area extraction block 200, the variance calculation block 202, the temperature estimation block 203, the gain calculation block 208, the standard value application block 209, the coefficient calculation block 210 and the upper limit setting block 213. The gain calculation block 208, the standard value application block 209 and the parameter ROM 211 are connected to the coefficient calculation block 210. The coefficient calculation block 210 is connected to the output block 114. The upper limit setting block 213 is connected to the output block 114. On the basis of control at the control block 115, the OB area extraction block 200 extracts an OB area of the device from the image buffer 107 to forward it to the buffer 1 201.

Fig. 3(a) is illustrative of where the OB area is located. In this embodiment, there is the OB area found at the right end of the device. Under control at the control block 115, the variance calculation block 202 reads the OB area from the buffer 1 201 to work out a variance value. Further, on the basis of information about the exposure conditions transmitted from the control block 115, the aforesaid variance value is corrected for the amount of amplification at the Gain 105, and the corrected value is forwarded to the temperature estimation block 203. On the basis of information from the temperature estimating ROM 204 wherein relations of the variance value vs. the temperature of the device are recorded, the temperature estimation block 203 finds the temperature of the device to forward it to the coefficient calculation block 210.

Fig. 4 is a characteristic view illustrative of in what relations the variance of the OB area is to the temperature of the device, showing that the larger the variance grows, the higher the temperature grows. Random noises at the OB area with no incident light are predominantly dark-current noises that have relations to the temperature of the device. Therefore, if the random noises at the OB area are worked out as a variance value and the variance value for changes in the temperature of the device is previously measured, it is then possible to estimate the temperature of the device from the variance value. In this embodiment, one temperature is found on condition that the temperature of the device is regarded as being constant; however, the present invention is not necessarily limited to that. For instance, with OB areas located at four sites as depicted in Fig. 3(b), a variance value for a specific block in the image may be found out by linear interpolation from the variance value of the OB area of the corresponding upper end, lower end, left end, and right end. It is thus possible to estimate the temperature of the device with high accuracy even when that temperature is not uniform. On the basis of information about the exposure conditions transmitted from the control block 115, the gain calculation block 208 finds out the quantity of amplification at Gain 105 to forward it the coefficient calculation block 210. Information regarding the shutter speed set by the metering estimation block 108 is forwarded from the control block 115 to the coefficient calculation block 210.

On the basis of information about the temperature from the aforesaid temperature estimation block 203, the gain from the gain calculation block 208 and the shutter speed from the control block 115, the coefficient calculation block 210 works out a coefficient for a function that gives the quantity of noise with respect to a signal value. This function is obtained from formulation on the basis of noise generation principles. Fig. 5 is illustrative of how the quantity of noise is formulated. Fig. 5(a) is a noise quantity vs. signal value level plot, showing that a constant term is added to a power function. Here let L be the signal value level and N be the quantity of noise. Then, there is the following formula (1) obtained.

$$N = AL^B + C \qquad (1)$$

where A, B and C are each a constant term.

However, the quantity of noise varies not only with the signal value level but also with the temperature and gain of the device. In Fig. 5(b), there is noise quantity vs. signal value level/temperature/gain plotted. Each curve has the form represented by formula (1), but its coefficient varies with temperature and gain. Here let T be the temperature and G be the gain, with the foregoing in mind. There is then the following formula (2) obtained.

$$N = a(T,G)L^{b(T,G)} + c(T,G) \qquad (2)$$

Here a(), b() and c() are each a function with the temperature T and gain G as parameters.

Fig. 6 is illustrative of the characteristics of this embodiment: Fig. 6(a) is illustrative of the characteristics of the aforesaid three functions a(), b() and c(). Three such functions have the temperature T and the gain G as input parameters, producing the respective constant terms A, B and C as outputs. These functions may be easily obtained by measuring the characteristics of the device system in advance. Further, Fig. 6(b) is a characteristic representation of shutter speed and noise increments. Random noises tend to increase as exposure time becomes long. Even with the same exposure quantity, therefore, a different shutter speed/stop combination would result in a difference in the quantity of noise. This difference must be corrected.

That correction may be formulated as formula (3) by multiplying formula (2) by a correction coefficient provided that S is the shutter speed.

$$N = \{a(T,G)L^{b(T,G)}+c(T,G)\}d(S) \qquad (3)$$

Here d() is a function with the shutter speed S as a parameter. The function d(), too, may be obtained by measuring the characteristics of the device system in advance. Four such functions a(), b(), c() and d() are recorded in the parameter ROM 211. Note here that for correction of the shutter speed, there is not necessarily any function in store. A noise increase grows sharply from a certain threshold value STH as can be seen from the characteristic representation of Fig. 6(b); there may be a simple approach such as multiplication of formula (2) by a fixed coefficient only at the time of a long exposure short of the threshold value STH. The coefficient calculation block 210 has the temperature T, gain G and shutter speed S as input parameters. According to the four functions a(), b(), c() and d() recorded in the parameter ROM 211, four function values a(T,G), b(T,G), c(T,G) and d(S) at the temperature T, gain G and shutter speed S are found, and each is going to become a noise calculation coefficient A, B, C, D at the temperature T, gain G, and shutter speed S. These coefficients define noise characteristics at the temperature T, gain G and shutter speed S.

Note here that the parameters for the temperature T, gain G and shutter speed S are not necessarily found for each taking. For instance, the temperature T is kept stable after the lapse of a given time from the power source being put on, and if the once calculated temperature information is recorded in the standard value application block 209, it is then possible to make do without the following calculation steps. By such arrangement, faster processing, power savings, etc. are achievable. The noise calculation coefficient worked out at the coefficient calculation block 210 is forwarded to the output block 114. The upper limit setting block 213 operates to limit the quantity of noise such that it does not exceed the given threshold value. The reason is to factor in a case where the reduction processing for the theoretical quantity of noise may be in excess. In other words, preference of the preserving original signals at the cost of slightly remaining noise components contributes a lot more to subjective image quality. The value set at the upper limit setting block 213 is forwarded to the output block 114. If necessary, the function of the upper limit setting block 213 may be stopped via the control block 115 by operation of the external I/F block 116.

Fig. 11 is illustrative of the architecture of data recorded by the output block 114 in the image recording medium. There are plural image files 311-314 recorded in a memory card 306. Each individual file corresponds to one taken image. Fig. 12 is illustrative of the architecture of one of those image files. The image file 311 is made up of image data 330 and incidental information 320. The incident information 320 is further composed of taking information 321 and noise characteristics 322. There is general information such as ISO sensitivity and shutter speed recorded in the taking information 321.

Fig. 13 is illustrative of the architecture of the noise characteristics 322. The noise characteristics 322 are composed of coefficients A, B, C and D corresponding to the functions a(), b(), c() and d() in the aforesaid formula (3), and the upper limit value of the quantity of noise. These values are worked out by the coefficient calculation block 210 at the time when the image data 330 stored in the same file are taken and recorded, and provide information for describing noise generation characteristics adaptive to the image data 330.

Fig. 14 is illustrative of the architecture of an image file according to one modification to the first embodiment of the present invention. In the modification of Fig. 14, approximate noise characteristics 325 are recorded in place of the noise characteristics 322 of Fig. 13, as depicted in the characteristic representation of Fig. 18. The approximate noise characteristics 325 are defined by each interval and the value of a coefficient corresponding to it at a time when noise generation characteristics are approximated by a piecewise straight line. Given in Fig. 18 are data indicative of each interval of the approximate noise characteristics 325, wherein at the upper limit signal values L1-L4 of the intervals, coefficients corresponding to them are represented by slopes A1-A4 and segments C1-C4 of the N-axis.

Fig. 33 is representative of the architecture of the noise estimation block in the instant modification. The values of L1-L4, A1-A4 and C1-C4 are stored in the parameter ROM 211 for each temperature and gain, and on the basis of the temperature T from the temperature calculation block 223 and the gain G from the gain calculation block, proper interval data and coefficients are selected by the coefficient selection block 212, and forwarded to and recorded in the output block 114. The temperature calculation block 223 is comprised of the OB area extraction block 200, the variance calculation block 202, the temperature estimation block 203 and the temperature estimating ROM 204 indicated in Fig. 2. The contents of the parameter ROM 211 are determined by measuring the characteristics of the imaging system in advance. As illustrated in the characteristic representation of Fig. 23, signal value L to noise quantity N relations are measured under various temperatures T and gains G. One example is the characteristics indicated by a broken line in Fig. 18. The intervals (L1-L4) are set depending on the level of the signal value L, and an approximate straight line for each interval is determined for the data of the found noise quantity contained in each interval, thereby obtaining the slopes of the approximate straight lines and the segments (C1-C4) of the N-axis. These values are found for each measured temperature T and gain G, and recorded in the parameter ROM 211.

With the arrangement as described above, it is possible to facilitate file operations such as file copying and file management upon entry of files at the time of image processing, because all the information necessary for noise reduction processing is obtainable from only the file corresponding to the taken image.

Fig. 15 is illustrative of the structure of a recording medium in the second modification to the instant embodiment of the present invention. A memory card 301 is built up of a plurality of image files 311-314 and a noise characteristics file 340. Fig. 16 is a representation of the architecture of one of the image files shown in Fig. 15. In place of the noise characteristics 322 themselves, noise identification information 323 is recorded in the image file 311. A noise characteristics file 340 is retrieved to read a coefficient corresponding to the noise identification information 323 so that a coefficient corresponding to image data 330 can be obtained.

Fig. 17 is a representation of the architecture of the noise characteristics file 340. The noise characteristics file 340 has a plurality of noise characteristics recorded in it, and comprises noise characteristic identification information, a coefficient corresponding to it, and an upper limit value thereof. According to the arrangement as described above, it is possible to make effective use of the recording medium, because there is no need of recording the same noise characteristics plural times.

Fig. 20 is a representation of the architecture of a noise characteristics file 340 in the third modification to the instant embodiment of the present invention. The noise characteristics file 340 here relies on a lookup table (LUT) in lieu of the function coefficients A, B, C and D so as to describe noise characteristics. There is an LUT provided per noise identification information 323.

Fig. 21 is illustrative of the contents of one of those LUTs. In the embodiment of Fig. 21, a noise quantity N is stored with a signal value L as an address so that the noise quantity N corresponding to the signal value L can be produced as output. With the arrangement as described above, it is possible to describe a complicated noise model, because the noise quantity N relative to a signal value can be directly addressed.

Fig. 22 is a representation of the architecture of a noise characteristics file 340 in the fourth modification to the instant embodiment of the present invention. The noise characteristics file 340 here is comprised of basic functions a (L), b(L), c(L) and d(L) for describing noise characteristics and a coefficient A, B, C, D for each identification information. A function N(L) that gives a noise quantity under taking conditions indicated by specific identification information is represented by the following formula (4):

$$N(L) = A \times a(L) + B \times b(L) + C \times c(L) + D \times d(L) \qquad (4)$$

The basic functions a(L), b(L), c(L) and d(L) are determined as follows. Possible values are set for parameters such as the temperature T, gain G and shutter speed S of an imaging device. As indicated in the characteristic representation of Fig. 23, signal value L-to-noise quantity N relations for each of all those conditions are determined by experimentation. Then, these relations are subjected to main component analysis to extract components as basic functions in descending order of contribution. Even when there is difficulty in formulation of a noise model, that model can be described in a limited memory capacity.

Fig. 19 is a representation of the architecture of an image file in the fifth modification to the first embodiment of the present invention. In the modification of Fig. 19, an algorithm type 326 and a control range 327 are added to the incidental information 320 of the image file depicted in Fig. 12. The algorithm type 326 designates the algorithm to be used for noise reduction processing. The control range 327 is a value that is used to control the quantity of noise to be reduced on user's request. The control range 327 comprises an upper limit value 802 used at a time when the quantity of reduction is largest, a lower limit value 803 used at a time when the quantity of reduction is smallest, and a standard value 804 used at a time when there is no user's request. Optionally, as depicted in Fig. 31, the control range 327 may have values halfway between the upper and the lower limit value as candidates of choice for the quantity of noise reduction. In this case, restrictions depending on taking conditions can be imposed on the intensity of noise reduction processing opted by the user; there is no ailment such as too slender or too much effect, ending up with poor resolution.

With the arrangement as described above, it is possible to record information that makes it possible to estimate the quantity of noise in correspondence to dynamically changing factors such as signal value levels, and the temperature, shutter speed and gain on taking. With a system adapted to read information out of a recording medium for image processing, on the other hand, it is possible to estimate the quantity of noise with high precisions and, hence, implement noise reduction processing with high precision. Further, because the upper limit is placed on the quantity of noise estimated, it is possible to implement processing with improved preserving original signals.

Fig. 8 is a representation of the architecture of the second embodiment of the present invention. In the second embodiment here, a color filter 400, a temperature sensor 401, a PreWB block 402 and a color signal separation block 403 are added to the aforesaid first embodiment of the present invention. The second embodiment is basically equivalent to the first embodiment; like reference numerals stand for like components. Only parts of the second embodiment different than the first embodiment are now explained. The color filter 400 is located at the front of CCD 103, and the temperature sensor 401 is positioned near it. The image buffer 107 is connected to the PreWB block 402 and the color signal separation block 403, and the color signal separation block 403 is connected to the output block 114. The PreWB block 402 is connected to Gain 105. The control block 115 is bidirectionally connected to the PreWB block 402 and the color signal separation block 403.

The action of the second embodiment is basically equivalent to that of the first embodiment; only different portions are explained. Referring here to Fig. 8, the flow of signals is explained. The shutter button is half pressed down to place the camera in a pre-image pickup mode. Video signals (color image) taken via the lens system 100, stop 101, low-pass filter 102, color filter 400 and CCD 103 are forwarded to the image buffer 107 by way of CDS 104, Gain 105 and A/D 106. Video signals within the image buffer 107 are forwarded to the metering estimation block 108, the focusing detection block 109 and the PreWB block 402. At the metering estimation block 108, the stop 101, the electronic shutter speed of CCD 103, the rate of amplification at Gain 105, etc. are controlled. At the focusing detection block 109, the edge intensity in the image is detected, and the AF motor 110 is controlled such that the maximum edge intensity is obtained, thereby obtaining a focused image. Further at the PreWB block 402, signals having a given luminance level are taken out of the video signals, and summated up for each color signal so that a simple white balance coefficient is worked out. The white balance coefficient is forwarded to Gain 105, where a different gain is multiplied to each color signal to implement white balance.

Then, the shutter button is full pressed down by way of the external I/F block 106 so that the image can be taken, and video signals are forwarded to the image buffer 107, as in the pre-image pickup mode. The image is taken on the basis of the exposure condition determined at the metering estimation block 102, the focusing condition determined at the focusing block 109, and the white balance coefficient found at the PreWB block 402, and those taking conditions are forwarded to the control block 115. The video signals within the image buffer 107 are forwarded to the color signal separation control 403, where they are separated for each filter, and then forwarded to the noise estimation block 112 and the output block 114. In the embodiment here, the color filter 400 located at the front of CCD 103 is of a primary-colors Bayer type. Fig. 9 is a representation of the architecture of the color filter of the primary-colors Bayer type. The primary-colors Bayer type has a basic unit of $2 \times 2$ pixels, with location of a red (R) filter, green (G1, G2) filters and a blue (B) filter. Note here that while the green filters are the same ones, they are designated as G1 and G2 for the convenience of processing.

At the color signal separation block 403, the video signals within the image buffer 107 are separated depending on the four color filters of R, G1, G2 and B. Color separations take place on the basis of control at the control block 115, and occur in sync with processing at the signal processing block 113, the noise estimation block 112 and the control block 114. At the output block 114, the video signals already subjected to color separations are recorded and stored in a memory card or the like. At the signal processing block 113, interpolation processing, enhancement processing, compression processing, all known in the art, etc. are applied to the video signals under control at the control block 115, and the processed signals are forwarded to the processed image output block 119, at which the processed signals are recorded and stored in a memory card or the like.

At the noise estimation block 112, four kinds of signals R, G1, G2 and B generated at the color signal separation block 403 are subjected to the respective adaptive noise estimations. That is, there are coefficients Ai, Bi, Ci and Di worked out for the respective four kinds of signals R, G1, G2 and B, where i is any one of R, G1, G2 and B. The architecture of the noise estimation block 112 is the same as shown in Fig. 2. At the coefficient calculation block 210, noise calculation coefficients A, B, C and D are worked out according to the four functions ai(), bi(), ci() and di () recorded for each of the four kinds of signals in the parameter ROM 211 with the temperature T, gain G and shutter speed S as parameters. Here i is any one of R, G1, G2 and B. At the parameter ROM 211, there are the four functions ai(), bi(), ci () and di() held, corresponding to the four kinds of signals R, G1, G2 and B. In response to the four kinds of signals R, G1, G2 and B, those functions are changed over to the ones adaptive to the respective signals to work out the noise calculation coefficients Ai, Bi, Ci and Di corresponding to the respective four kinds of signals.

Fig. 10 is illustrative of color-by-color noise characteristics 361 of the architecture of data recorded at the output block 114 in the recording medium. Fig. 10 corresponds to the noise characteristics 322 contained in the image file of Fig. 12 explained in connection with the first embodiment of the present invention. In correspondence to the image signals comprising four kinds of signals R, G1, G2 and B, the noise calculation coefficients A, B, C and D and the noise upper limit values are recorded, four kinds per each. Proper noise estimation can be made for each signal so that high-precision noise reduction processing is feasible.

Fig. 27 is illustrative of the architecture of the color-by-color noise characteristics 361 in the first modification of the second embodiment of the present invention. The modification of Fig. 27 is comprised of four coefficients A, B, C and D for a signal G1 that become basic noise characteristics, a correction term for working out the quantities of noises of other signals G2, R and B from the quantity of noise found from the basic noise characteristics, and a scene correction term for making correction of the quantity of noise depending on the scene to be taken. The scene correction term is determined on the basis of known scene identification techniques or taking mode information set from the external I/F block 116; for instance, it is determined in such a way as to get tight for portrait shots or weak for close-up shots. For the noise characteristics of the signals G2, R and B, it is only needed to keep the correction term in store so that memory capacity can be cut down. By use of the scene correction term, a scene-adaptive noise reduction can be implemented so that subjective image quality can be enhanced.

The aforesaid arrangement ensures that for signals from the color CCD with the color filter located at its front, the information for estimating the quantity in pixel unit of noise that matches dynamically changing factors such as signal value levels as well as temperature, shutter speed and gain at the time of taking can be recorded for each signal divided by the color filter. Note here that while the above embodiment has been described typically with reference to the primary-colors Bayer type single-CCD, it is never ever limited thereto. For instance, this arrangement may be equally applied to complementary color filters, 2-chip CCDs, and 3-chip CCDs as well.

Fig. 7 is illustrative of one example of the structure of an image processor based on the third embodiment of the present invention, which is made up of an input block 510, an image buffer block 107, a horizontal line extraction block 500, a smoothing block 1 501, a buffer 502, a vertical line extraction block 503, a smoothing block 2 504, a threshold value setting block 505, a signal processing block 113, a display block 514, an external I/F block 503 and a control block 115. The input block 510 is connected to the signal processing block 113 by way of the image buffer 107, the horizontal line extraction block 500, the smoothing block 1 501, the buffer 502, the vertical line extraction block 503 and the smoothing block 2 504. The signal processing block 113 is further connected to the display block 514. Furthermore, the input block 510 is connected to the threshold value setting block 505 that is in turn connected to the smoothing blocks 1 501 and 2 504. A standard value application block 509 is connected to the threshold value setting block 505. The control block 115 is bidirectionally connected to the horizontal line extraction block 500, the vertical line extraction block 503, the threshold value setting block 505 and the standard value application block 509.

The third embodiment operates as follows. On the basis of control at the control block 115, the input block 510 reads from the image file 311 image data as well as a coefficient indicative of noise characteristics and its upper limit value, forwarding the image data to the image buffer 107 and that coefficient and its upper limit value to the threshold value setting block 505. On the basis of control at the control block 115, the horizontal line extraction block 500 for image data sequentially extracts video signals in horizontal line unit, forwarding them to the smoothing block 1 501. On the basis of control at the control block 115, the threshold value setting block 505 obtains the quantity of noise in pixel unit from the video signals in horizontal line unit, extracted by the horizontal line block 500, and then forwards that to the smoothing block 1 501 as a threshold value. Using coefficients A, B, C and D transmitted from the input block 510, noise quantity N is worked out from the following formula (5) on the basis of a signal value L for a pixel.

$$N = \{AL^B + C)\}D \qquad (5)$$

Further, when the noise quantity N exceeds the upper limit value transmitted from the input block 510, it is forwarded to the smoothing block 1 501 after replaced by that upper limit value. Note here that if any noise characteristics are not recorded in the image file 311, then a standard coefficient and its upper limit value are produced as outputs from the standard value application block 509 under control at the control block 115 for forwarding to the threshold value setting block 505. At the smoothing block 1 501, video signals from the horizontal line extraction block 500 are scanned in pixel unit for implementing known hysteresis smoothing wherein the threshold value from the threshold value setting block 505 is used as a noise quantity. The results are sequentially produced as outputs into the buffer 502. The hysteresis smoothing at the smoothing block 1 501 occurs in sync with the operation of the threshold value setting block 505 under control at the control block 115. As all signals at the image buffer 107 are processed at the smoothing block 1 501, it allows the vertical line extraction block 503 to sequentially extract the video signals in vertical line unit from the buffer 502 under control at the control block 115 and forward them to the smoothing block 2 504. On the basis of control at the control block 115, the threshold value setting block 505 obtains the quantity of noise in pixel unit from the video signals in horizontal line unit, extracted by the horizontal line block 500, and then forwards that to the smoothing block 2 504 as a threshold value. How to work out the quantity of noise is the same as in the aforesaid processing in horizontal line unit. At the smoothing block 2 504, video signals from the vertical line extraction block 503 are scanned in pixel unit for implementing known hysteresis smoothing wherein the threshold value from the threshold value setting block 505 is used as a noise quantity. The results are sequentially produced as outputs into the signal processing block 113, and displayed on the display block 514 after other signal processing has been implemented. The hysteresis smoothing at the smoothing block 2 504 occurs in sync with the operation of the threshold value setting block 505 under control at the control block 115.

Fig. 28 is illustrative of the image processor in the first modification to the third embodiment of the present invention. This modification is characterized in that a noise reduction block A582, a noise reduction block B583, a selector A581 and a selector B584 are provided in lieu of the noise reduction block 512. On the basis of control at the control block 115, algorithm types are read from the image file 311 through the input block 510. On the basis of control at the control block 115, selection is made between selector A581 and selector B584 in response to the type of algorithm, switching between noise reduction algorithms. Thus, depending on taking conditions or the characteristics of the imaging system, selection is made between the noise reduction algorithms so that effective noise reduction processing is enabled.

Fig. 25 is illustrative of the architecture of the threshold value setting block 505 in the second modification to the third embodiment of the present invention. This modification is comprised of a cutoff quantity setting block 801, a noise quantity calculation block 601 and a noise quantity correction block 602. Values in a control range are read from the image file 311 through the input block 510 for forwarding to the threshold value setting block 505. The cutoff quantity setting block 801 presents such a user interface as depicted in the representation of Fig. 24, obtaining the noise reduction level desired by the user depending on the position of a slide bar set by the user. Depending on the thus obtained level, a value halfway between the upper and lower limit values of the control range is worked out as a noise correction quantity for forwarding to the noise quantity correction block 602. The position of the slide bar and the noise correction quantity are in proportional relations, as depicted in Fig. 29. Alternatively, as depicted in Fig. 30, the position of the slide bar and the noise correction quantity may be in non-linear relations. The user would subjectively feel cutoff effect changes as natural ones. The noise quantity calculation block 601 uses the signal value of the pixel to be processed and four coefficients A, B, C and D to work out the noise quantity from formula (5) and forward it to the noise quantity correction block 602. At the noise quantity correction block 602, the noise quantity transmitted from the noise quantity calculation block 601 is corrected depending on the noise correction quantity transmitted from the cutoff quantity setting block 801. At the noise correction block 602 built up of a multiplier, the noise correction quantity is multiplied to the noise quantity transmitted from the noise quantity calculation block 601, thereby working out the quantity of corrected noise. The corrected noise quantity is forwarded to the smoothing blocks 1 501 and 2 502, where it is used as a threshold value at the time of smoothing. When there are candidates for values of choice held for the control range, it is preferable to present such a user interface as depicted in the representation of Fig. 31 and obtain a cutoff quantity correction value selected by the user. In this case, restrictions depending on taking conditions can be imposed on the intensity of noise reduction processing opted by the user; there is no ailment such as too slender or too much effect, ending up with poor resolution.

The aforesaid arrangement makes it possible to estimate the quantity of noise in pixel unit, depending on dynamically changing factors such as signal value levels as well as temperatures, shutter speeds and gains at the time of taking. On the basis of such estimations, only signals less than the noise quantity are smoothed so that high-precision noise reduction processing is enabled. With the upper limit value set to the estimated noise quantity, processing can be implemented with good preserving of the original signals. Note here that while the noise quantity is estimated in pixel unit in the aforesaid third embodiment, the present invention is never ever limited to that. For instance, the noise quantity may be estimated in any desired unit area such as $2\times2$ pixels, and $4\times4$ pixels, in which case the precision of noise estimation goes down somewhat, but much faster processing is achievable.

An image processor according to the fourth embodiment of the present invention is practically the same as shown in the representation of Fig. 7, and applied as a display system directed to the image file produced from the second embodiment of the present invention. As depicted in the representation of Fig. 32, there are four threshold value setting blocks (705-708), each indicated by 505 in Fig. 7, provided in correspondence to the separated four signals R, G1, G2 and B. Using the respective threshold values, the noise reduction processing described in connection with the second embodiment is implemented for the separated four signals R, G1, G2 and B.

Fig. 26 is illustrative of the architecture of the threshold value setting block 505 in the first modification to the fourth embodiment of the present invention. The threshold value setting block 505 is built up of a noise quantity calculation block 601, a noise quantity correction block 602 and an upper limit setting block 603. At the noise quantity calculation block 601, a signal value of each of G2, R and B for the pixel to be processed and four coefficients A, B, C and D for the signal G1 that provide the basic noise characteristics are used to find out the noise quantity of each of G2, R and B from formula (5), and that noise quantity is forwarded to the noise quantity correction block 602. At the noise quantity correction block 602, the noise quantity of each of G2, R and B transmitted from the noise quantity calculation block 601 is corrected by the correction term and scene correction term for each of G2, R and B, and the noise quantity corresponding to each of G2, R and B is worked out. At the noise correction block 602 made up of a multiplier, the correction term and scene correction term for any one of G2, R and B is multiplied to the noise quantity corresponding to each of G2, R and B transmitted from the noise quantity calculation block 601, thereby working out the noise quantity for each of G2, R and B. At the upper limit setting section 603, when there is the noise quantity corrected at the noise correction block 602 exceeding the upper limit value, it is replaced by that upper limit value, thereby keeping cutoff processing from going too far. The noise quantity produced out of the upper limit setting block 603 is forwarded to the smoothing blocks 1 501 and 2 502, where it is used as a threshold value for smoothing processing.

While the embodiments of the present invention have been described as implemented on hardware, the present

14

invention is never ever limited to those. One example of processing on software is now explained. Fig. 34 is a flowchart for noise reduction processing on software. Such software processing is achievable by letting a computer run on a program. If the program is recorded in a recording medium and that recording medium is moved as desired, then that program can be run wherever there is a computer installed.

Referring to the flowchart of Fig. 34, a full-color signal is read in at Step 1. At Step 2, header information is read in and a noise calculation coefficient corresponding to the full-color signal is read in. At Step 3, the signal is separated into individual colors. At Step 4, a noise calculation coefficient matching the separated color is selected for forwarding to Step 7. At Step 5, each color signal is individually scanned. At Step 6, a given size, for instance, $4 \times 4$ pixel unit, around a pixel of interest is extracted to work out an average of a signal value level for forwarding to Step 7. At Step 7, on the basis of the aforesaid formula (5), a signal value level in a local area around the pixel of interest and the noise calculation coefficient are used to work out the noise quantity matching that signal value level for forwarding to Step 8. At Step 8, smoothing processing is applied to the signal of the pixel of interest using as a threshold value the noise quantity matching the signal value level in the local area. At Step 9, the signals subjected to the smoothing processing are sequentially produced as outputs. At Step 10, whether or not screen scanning is over is determined, and if not, there is Step 5 resumed for individual scanning of the aforesaid respective color signals. Subsequently, loop processing of Step 5-Step 10 is repeated. If screen scanning is over, there is Step 11 taken over. At step 11, whether or not all the color signals are subjected to the aforesaid respective processing steps is determined, and if not, there is Step 3 resumed where the aforesaid color signals are individually scanned, after which loop processing of Step 3-Step 11 is repeated. If the processing steps for the full-color signal are over, it means that job has been done.

The aforesaid arrangement ensures that for signals from the color CCD with the color filters located on its front, it is possible to make estimation of, per signal divided by the color filter, the quantity of noise in pixel unit that depends on dynamically changing factors such as signal value levels as well as temperatures, shutter speeds and gains at the time of taking. Smoothing operation that occurs on the quantity of noise estimated for each color signal makes high-precision noise reduction processing possible. Note here that while the above embodiment has been described with reference to a primary-colors Bayer type single CCD, the present invention is never ever limited to that. For instance, the present invention may be equally applied to complementary color filters, and 2-chip or 3-chip CCDs as well.

Fig. 34 is illustrative of one exemplary program run on color image processing, but this program may be modified in such a way as to fit in with gray scale image processing. In Fig. 34, Step 3 of separating the read-in signals for each color signal, Step 5 of individual scanning of the color signals, and Step 11 of judging whether or not the processing of the full-color signal is over are omitted. Fig. 35 is a flowchart of one exemplary program run on gray scale image processing. In the example of Fig. 35, the steps involved are the same as in the processing of Fig. 34 saving the color image processing step, but the display of step counts here is partially modified.

The image processing program for color images, shown in Fig. 34, and the image processing program for gray scale images may be recorded in a recording medium. If that recording medium is installed in a computer, then noise reduction processing of high precision can be applied to color images and gray scale images wherever the computer operates yet without restrictions on place and time.

POSSIBLE INDUSTRIAL APPLICATIONS

As described above, the present invention can provide an imaging system and an image recording medium as well as an image processor, an image processing program and its recording medium, wherein, even upon post-processing of data recorded in the recording medium, noise reduction processing optimized for taking conditions can be implemented.

**Claims**

1. An imaging system adapted to record a digitalized signal from an imaging device in a recording medium, **characterized by** comprising a noise characteristics generation means for generating characteristics of noise included in said signal, and a noise characteristics recording means for recording said characteristics of noise in the recording medium.

2. The imaging system according to claim 1, **characterized by** further comprising color filters located on a front of said imaging device and a separation means for separating said signal into signals for each color filter.

3. The imaging system according to claim 1, **characterized in that** said noise characteristics recording means is adapted to record said characteristics of noise in association with said signal.

4. The imaging system according to claim 2, **characterized in that** said noise characteristics generation means comprises a separated signal noise characteristics generation means for generating, on a signal separated for each color filter, associated noise characteristics.

5. The imaging system according to claim 1 or 2, **characterized in that** said noise characteristics generation means comprises a parameter calculation means for working out a parameter that is based on at least one item of information out of (1) a signal value level of said signal, (2) a temperature of said imaging device, (3) a gain with respect to said signal, and (4) a shutter speed at a taking time, and a function setting means for setting a function of providing a quantity of noise included in said signal.

6. The imaging system according to claim 5, **characterized in that** said function setting means is provided to work out a noise quantity N with respect to the signal level value L of said signal from a functional formula $N = (AL^B+C) D$, and comprises a coefficient calculation means that uses as parameters the temperature T of said imaging device, the gain G with respect to said signal and the shutter speed S at a taking time to find out the respective coefficients A, B, C and D from three functions a(T,G), b(T,G) and c(T,G) with said T and G as parameters and a function d(S) with S as a parameter.

7. The imaging system according to claim 5, **characterized in that** said parameter calculation means further comprises a gain calculation means for finding out said gain on the basis of at least one item of information out of (1) ISO sensitivity, (2) exposure information and (3) white balance information.

8. The imaging system according to claim 1 or 2, **characterized in that** said noise characteristics generation means is a noise function setting means for setting a function that provides a quantity of noise included in said signal, with a parameter based on the signal value level of said signal as an independent variable.

9. The imaging system according to claim 8, **characterized in that** said noise function setting means comprises a taking condition setting means for setting a taking condition based on at least one item of information out of (1) a temperature of said imaging device, (2) a gain and (3) a shutter speed, and a condition associated function setting means for setting a function that provides a quantity of noise included in said signal in association with said taking condition.

10. The imaging system according to claim 8 or 9, **characterized in that** said noise function setting means is provided to work out a noise quantity N with respect to a signal value L of said signal from an interval function formula $N = A_iL+C_i$ where $1 \leqq i \leqq M$ with M being a number of section intervals of the signal value L, and comprises a coefficient setting means for setting a value for defining each section interval of the signal value L, and coefficients Ai and Ci corresponding to each interval.

11. The imaging system according to claim 8 or 9, **characterized in that** said noise function setting means comprises a lookup table means for finding out a noise quantity with respect to the signal value level of said signal.

12. The imaging system according to claim 9, **characterized in that** said taking condition setting means further comprises a gain calculation means for finding out said gain on the basis of at least one item of information out of (1) ISO sensitivity, (2) exposure information and (3) white balance information.

13. An image processor adapted to read image data recorded in a recording medium for implementation of noise reduction processing, **characterized by** comprising:

a noise characteristics acquisition means for reading noise characteristics recorded in said recording medium, a noise estimation means for estimating a quantity of noise included in said image data on the basis of said noise characteristics, and a noise reduction means for reducing noise in said image data on the basis of said quantity of noise.

14. The image processor according to claim 13, **characterized in that** said noise reduction means further comprises a reduction quantity limiting means for limiting a quantity of noise reduction.

15. An image recording medium with image signal data recorded therein, **characterized by** comprising:

a noise characteristics holder means wherein characteristics of noise in the image signal data recorded is recorded.

**16.** The image recording medium according to claim 15, **characterized in that** said characteristics of noise are set by a function setting means wherein a parameter based on at least one item of information out of (1) a signal value level of said image signal, (2) a temperature of an imaging device at a time of acquiring said image signal data, (3) a gain with respect to said image signal, and (4) a shutter speed of the imaging device at a time of acquiring said image signal data, is worked out, and said parameter is used as an independent variable to provide a quantity of noise included in said image signal.

**17.** The image recording medium according to claim 16, **characterized in that** said function setting means for providing the quantity of noise is provided to work out a noise quantity N with respect to a signal value L of said image signal from a functional formula N = (ALB+C)D, and comprises a coefficient calculation means for using as parameters a temperature T of said imaging device, a gain G with respect to said signal and a shutter speed S at a taking time to find out respective coefficients A, B, C and D from three functions with said T and G as parameters and a function d(S) with S as a parameter, and said characteristics of noise are the coefficients A, B, C and D set by said coefficient calculation means.

**18.** The image recording medium according to claim 15, **characterized in that** said characteristics of noise are set by a noise function setting means for providing a quantity of noise included in said signal, with a parameter based on the signal value level of said image signal as an independent variable.

**19.** The image recording medium according to claim 18, **characterized in that** said noise function setting means comprises a taking condition setting means for setting a taking condition based on at least one item of information out of (1) a temperature of an imaging device at a time of acquiring said image signal data, (2) a gain with respect to said image signal and (3) a shutter speed of the imaging device at a time of acquiring said image signal data, and a condition associated function setting means for a setting a function that provides a quantity of noise included in said signal in association with said taking condition.

**20.** The imaging system according to claim 18, **characterized in that** said noise function setting means is provided to work out a noise quantity N with respect to a signal value L of said signal from an interval function formula $N = A_i L + C_i$ where $1 \leq i \leq M$ with M being a number of section intervals of the signal value L, and comprises a coefficient setting means for setting a value for defining each section interval of the signal value L, and coefficients Ai and Ci corresponding to each interval.

**21.** An image processing program for letting a computer implement steps, wherein said steps comprises a step of reading an image signal in the computer, a step of reading header information in the computer to read noise characteristics corresponding to the image signal, a step of estimating a quantity of noise included in said image signal on the basis of said noise characteristics, a step of reducing noise in said image signal on the basis of said quantity of noise, and a step of producing an image signal having said noise reduced as an output.

**22.** An image processing program for letting a computer implement steps, wherein said steps comprises a step of reading a full-color signal in the computer, a step of reading header information in the computer to read a noise calculation coefficient corresponding to the full-color signal, a step of separating said full-color signal into each color signal, a step of selecting a noise calculation coefficient corresponding to said separated color, a step of individually scanning said each color signal, a step of extracting a pixel unit of given size around a pixel of interest to work out an average of a signal value level, a step of working out, on the basis of a given operation, a noise quantity corresponding to a signal value level from a signal value level in a local area around said pixel of interest and said noise calculation coefficient, a step of applying smoothing operation to a signal of said pixel of interest while a noise quantity corresponding to the signal value level in a local area is used as a threshold value, a step of sequentially producing as outputs signals subjected to said smoothing operation, a step of judging whether or not screen scanning is complete, and a step of judging whether or not said respective steps for the full-color signal are complete.

**23.** An image processing program for letting a computer implement steps, wherein said steps comprises a step of reading an image signal in a computer, a step of reading header information in the computer to read a noise calculation coefficient corresponding to the image signal, a step of selecting a noise calculation coefficient corresponding to said image signal, a step of extracting a pixel unit of given size around a pixel of interest to work out an average of a signal value level, a step of working out, on the basis of a given operation, a noise quantity corresponding to a signal value level from a signal value level in a local area around said pixel of interest and said noise calculation coefficient, a step of applying smoothing operation to a signal of said pixel of interest while a noise quantity corresponding to the signal value level in a local area is used as a threshold value, a step of sequentially producing as outputs signals subjected to said smoothing operation, and a step of judging whether or not screen scanning is complete.

**24.** A recording medium having the image processing program according to claim 21 or 23 recorded therein.

# FIG. 1

Lens system 100

Stop 101　Low-pass filter 102

CCD 103

| Signal processing block 113 | Processed image output block 119 |

CDS 104 → Gain 105 → A/D 106 → Image buffer 107

Output block 114

AF motor 110

Metering estimation block 108

Noise estimation block 112

Focusing detection block 109

Control block 115

External I F block 116

———— Video signal

———— Control signal

-------- Other data

EP 1 737 217 A2

# FIG. 2

Noise estimation block 112

Temperature estimation ROM 204

Image buffer 107 → OB area extraction block 200 → Buffer 202 → Variance calculation block 202 → Temperature estimation block 203

Gain calculation block 208

Standard value application block 209

Control block 115 ← Coefficient calculation block 210

Parameter ROM 211

Upper limit setting block 213

Output block 114

——— Video signal

——— Control signal

- - - - - Other data

EP 1 737 217 A2

# FIG. 3(a)

Location of the OB area
at the right end

OB area

Image area

# FIG. 3(b)

Location of the OB area at four ends

Image area

OB area at the upper end

OB area

OB area at the left end

OB area at the right end

OB area at the lower end

EP 1 737 217 A2

# FIG. 4

Temperature

Variance

# FIG. 5(a)

Noise quantity relations to signal levels

Noise quantity (N)

$$N = AL^B + C$$

Signal value level (L)

# FIG. 5(b)

Noise quantity relations to signal levels, temperatures and gains

Noise quantity (N)

Temperature T3 — Gain ×4 / Gain ×2 / Gain ×1

Temperature T2 — Gain ×4 / Gain ×2 / Gain ×1

Gain ×4 / Gain ×2 / Gain ×1

Temperature T1

$$N = a(T,G)L^{b(T,G)} + c(T,G)$$

Signal value level (L)

# FIG. 6(a)

Three coefficients about noise quantity, each in function form

Temperature (T)

Coefficient (A)

$A = a(T,G)$

Gain (G)

Temperature (T)

Coefficient (B)

$B = b(T,G)$

Gain (G)

Temperature (T)

Coefficient (C)

$C = c(T,G)$

Gain (G)

# FIG. 6(b)

Correction coefficient for the shutter speed, in function form.

$D = d(S)$

Noise quantity increment (D)

$S_{TH}$

Shutter speed (S)

EP 1 737 217 A2

# FIG. 7

Noise reduction block 512

Image buffer block 107 → Horizontal line extraction block 500 → Smoothing block 501 → Buffer 502

Image file 311 → Input block 510

Standard value application block 509

Threshold value setting block 505

Control block 115

External I/F block 116

Smoothing block 504 ← Vertical line extraction block 503

Signal processing block 113

Display block 514

——— Video signal

——— Control signal

--------- Other data

EP 1 737 217 A2

# FIG. 8

Lens system 100
Stop 101
Low-pass filter 102
Color filters 400
CCD 103
Temperature sensor 401

AF motor 110

CDS 104 → Gain 105 → A/D 106 → Image buffer 107

Processed image output block 119 ← Signal processing block 113

Metering estimation block 108

Focusing detection block 109

Noise estimation block 112

Color separation block 403

Output block 114

Control block 115

PreWB block 402

External I/F block 116

EP 1 737 217 A2

26

# FIG. 9

| R | G1 |
|---|----|
| G2 | B |

# FIG. 10

Color-by-color noise characteristics 361

| Green1 coefficient A | Green2 coefficient A | Red coefficient A | Blue coefficient A |
|---|---|---|---|
| Green1 coefficient B | Green2 coefficient B | Red coefficient B | Blue coefficient B |
| Green1 coefficient C | Green2 coefficient C | Red coefficient C | Blue coefficient C |
| Green1 coefficient D | Green2 coefficient D | Red coefficient D | Blue coefficient D |
| Green1 upper limit value | Green2 upper limit value | Red upper limit value | Blue upper limit value |

EP 1 737 217 A2

# FIG. 11

Memory card 301

| Image file 311 |
|:---:|
| Image file 312 |
| Image file 313 |
| Image filex 314 |

# FIG. 12

Image file 311

Incidental information 320

| Taking information 321 |
|:---:|
| Noise characteristics 322 |

Image data 330

# FIG. 13

Noise characteristics 322

| Coefficient A |
|:---:|
| Coefficient B |
| Coefficient C |
| Coefficient D |
| Upper limit value |

# FIG. 14

Approximate noise characteristics 325

| Interval upper limit | Slope | Segment |
|:---:|:---:|:---:|
| L1 | A1 | C1 |
| L2 | A2 | C2 |
| L3 | A3 | C3 |
| L4 | A4 | C4 |

EP 1 737 217 A2

# FIG. 15

Memory card 301

| Noise characteristics file 340 |
| Image file 1 311 |
| Image file 2 312 |
| Image file 3 313 |
| • |
| • |
| • |
| • |
| Image file x 314 |

# FIG. 16

Image file 311

**Incidental information 320**

Taking information 321

Noise characteristics identification information 323

**Image data 330**

# FIG. 17

Noise characteristics file 340

| Identification information 1 | Coefficient A1 | Coefficient B1 | Coefficient C1 | Coefficient D1 | Upper limit value 1 |
|---|---|---|---|---|---|
| Identification information 2 | Coefficient A2 | Coefficient B2 | Coefficient C2 | Coefficient D2 | Upper limit value 2 |
| Identification information 3 | Coefficient A3 | Coefficient B3 | Coefficient C3 | Coefficient D3 | Upper limit value 3 |
| | | | ⚬ ⚬ ⚬ ⚬ | | |

# FIG. 18

Noise quantity N

Approximate noise
characteristics 325

N=A4×L+C4

———— Section straight
line

N=A3×L+C3

----- Found value

N=A2×L+C2

N=A1×L+C1

L1   L2      L3      Interval 4   L4   Signal level L

Interval 1

Interval 3

Interval 2

# FIG. 19

Image file 311

Incidental information 320

Taking information 321

Noise characteristics 322

Algorithm selection 326

Control range 327

Image data 330

# FIG. 20

Noise characteristics file 340

| Identification information1 | LUT1 391 |
| Identification information2 | LUT2 392 |
| Identification information3 | LUT3 393 |

⋮

# FIG. 21

LUT1 391

| L1 | ⟶ | N1 |
| L2 | ⟶ | N2 |
| L3 | ⟶ | N3 |
| ⋮ | | ⋮ |
| Lx | ⟶ | Nx |

# FIG. 22

Noise characteristics file 340

| | Basic function a | Basic function b | Basic function c | Basic function d |
|---|---|---|---|---|
| Identification information 1 | Coefficient A1 | Coefficient B1 | Coefficient C1 | Coefficient D1 |
| Identification information 2 | Coefficient A2 | Coefficient B2 | Coefficient C2 | Coefficient D2 |
| Identification information 3 | Coefficient A3 | Coefficient B3 | Coefficient C3 | Cbefficient D3 |

⋮

# FIG. 23

Noise quantity N

Condition 1

Condition 2
Condition 3

Condition 4

Signal level L

# FIG. 24

Reduction quantity setting block 801

Noise reduction

Low                                          High

Lower limit value 803

Standard value 804

Upper limit value 802

Slide bar 805

# FIG. 25

Threshold value setting block 505

Control range ----→ | Input block 510 | ------------------→ | Reduction quantity setting block 801 |

User designation ----------------------------------→

Signal value of the pixel to be processed ====→ | Noise quantity calculation block 601 | ----→ | Noise quantity correction block 602 | ----→ Threshold value

Coefficient --------------------↑

# FIG. 26

Threshold value setting block 505

Upper limit value ------------------------------------------------

Correction term for G2,R,B ----------------------------------

G2,R,B signal value of the pixel to be processed G1 ====→ | Noise quantity calculation block 601 | ----→ | Noise quantity calculation block 602 | 

Green 1 coefficient ----------------↑

| Upper limit setting block 603 | ====→ Threshold value

Ccene correction term --------------------------------------

EP 1 737 217 A2

# FIG. 27

Color-by-color noise characteristics 361

| Green 1 coefficient A | Correction term for Green 2 | Correction term for Red | Correction term for Blue | Scene correction term |
|---|---|---|---|---|
| Green 1 coefficient B | Upper limit value Green 2 | Upper limit value Red | Upper limit value Blue | |
| Green 1 coefficient C | | | | |
| Green 1 coefficient D | | | | |
| Green 1 upper limit value | | | | |

# FIG. 28

Image file 311

Input block 510 → Selector A 581 → Noise reduction block A 582 → Selector B 584

Noise reduction block B 583

Control block 115

Signal processing block 311

Display block 514

External I/F block 116

——————— Video signal

——————— Control signal

------------- Other data

EP 1 737 217 A2

# FIG. 29

Noise correction
quantity

Upper limit value

Standard value

Lower limit value

Lowest            Highest

Position of the
slide bar

# FIG. 30

Noise correction
quantity

Upper limit value

Lower limit value

Lowest            Highest

Position of the
slide bar

# FIG. 31

Reduction quantity setting block 801

Noise reduction

Lowest            Highest

1    2    3    4    5

Candidate value of choice

EP 1 737 217 A2

# FIG. 32

R coefficient --------┐

R signal ——→ | R value setting block 705 |---------→R threshold value

G1 coefficient ---------┐

G1 signal ——→ | G1 threshold value setting block 706 |----→G1 threshold value

G2 coefficient ---------┐

G2 signal ——→ | G2 threshold value setting block 707 |---→G2 threshold value

B coefficient ---------┐

B signal ——→ | B threshold value setting block 708 |----→B threshold value

# FIG. 33

| Noise estimation block 112 |

—— Video signal
—— Control signal
------ Other data

| Temperature calculation block 223 |

| Gain calculation block 208 |

| Standard value application block 209 |

| Control block 115 |

| Coefficient selection block 212 | ←---- | Parameter ROM 211 |

| Upper limit setting block 213 |

| Output block 114 |

EP 1 737 217 A2

# FIG. 34

Start

Step1
Reading of full-color signals

Step2
Reading of header information

Step3 Separation of color signals

Step4
Coefficient selection

Step5 Scanning of each color signal

Step6
Calculation of the average value of a local area

Calculation of noise quantity Step7

Step8 Smoothing processing

Output of processed signals Step9

Step10
Is scanning over?

Yes

Step11
Is full-color signal processing over?

Yes

End

37

# FIG. 35

Start

Step1
Reading of image signals

Step2
Reading of header information

Coefficient selection | Step3

Step4
Calculation of the
average value of
a local area

Calculation of
noise quantity | Step5

Step6
Smoothing processing

Step7
Output of processed signals

Step8
Is scanning over?

Yes

End

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003189236 A

- JP 2001157057 A